# EUROPEAN PATENT SPECIFICATION

(11) **EP 4 380 900 B1**
(45) Date of publication and mention of the grant of the patent: **04.02.2026**
(21) Application number: 22940024.7
(22) Date of filing: 28.04.2022
(51) Int. Cl.: C02F 3/00, C02F 3/32, C02F 1/32, C02F 1/66, C02F 3/06, C02F 103/32

(54) **SYSTEM AND METHOD FOR MONITORING AND CONTROL OF WASTEWATER BIOFILTRATION**
SYSTEM UND VERFAHREN ZUR ÜBERWACHUNG UND STEUERUNG VON ABWASSERBIOFILTRATION
SYSTÈME ET PROCÉDÉ DE SURVEILLANCE ET DE COMMANDE DE BIOFILTRATION DES EAUX USÉES

(43) Date of publication of application: 12.06.2024
(73) Proprietor: Biofiltro USA, Inc., Davis, CA (US)
(72) Inventor: SJÖGREN, Matías, Santiago (CL); PRAM, Sina, Fresno CA 93703-2925, Florida (US)
(74) Representative: Herrero & Asociados, S.L.
(86) International application number: PCT/IB2022/053967
(87) International publication number: WO 2023/209425

(56) References cited:
- AU-A1- 2006 233 198
- AU-B2- 2013 397 276
- BR-B1- 102014 031 422
- CN-A- 108 545 894
- KR-B1- 102 078 056
- US-A1- 2005 133 442
- US-A1- 2016 176 736
- US-A1- 2019 062 186
- US-A1- 2019 084 855

## Description

The invention relates to wastewater biofiltration, in particular, to a wastewater biofiltration system and method with an integrated system for monitoring and control of wastewater biofiltration. The monitoring and control system and method being integrated in a wastewater biofiltration system comprising a set of units which operation is monitored and controlled by means of at least one controller and an operational architecture specially designed to improve biofiltration management.

### BACKGROUND OF THE INVENTION

Contaminants present in sewage and wastewater include solids, organic matter as well as nutrients such as nitrogen and phosphorus. Physical, biological, and chemical methods are used to remove said contaminants. Among these, biological methods for removing pollutants using bacteria are most economically and efficiently used, and thus are most widely used in the field. Filtering water trough said biological methods is commonly known as biofiltration.

U.S. Pat. No. 7,540,960 (Villagra) discloses a biofiltration technique for treating contaminated water using earthworm's humus to inoculate diverse types of bacteria. As described in said patent, bacteria can be inoculated using different liquid or semi-liquid residues, which when in contact with the humus generate a bacterial flora specialized in degrading the type of liquid or semi-liquid residue that is being used. The ability of worms to compost organic matter has long been known, but there are limitations in connection to the quantity of waste able to be processed, the smell involved when processing organic waste and flow management in the case of wastewater.

US2019084855A1 discloses a vermicomposting system for treating waste water streams that includes a pretreatment stage for converting liquid or semi-liquid organic waste streams into a feedstock for vermicomposting; a vermicomposting digestion stage having populations of worms and beneficial bacteria which consume and break down organic material and nutrients present in the feedstock from the pretreatment stage to create worm castings, vermicompost, and a liquid compost tea that contains plant nutrients, plant growth promoting substances, and beneficial bacteria; and a post-treatment stage in which the liquid compost tea is removed for use as an soil amendment or inoculant, or is further treated in a separate containment tank where nutrients and oxygen levels are controlled to increase specific bacterial and fungal populations.

US2019062186A1 discloses media beds containing worms living in an oxygenated aqueous environment are provided for the remediation of water containing excreted and other oxidizable organic or chemical waste. The media beds may include cultivated plant life in addition to the cultivated worm population for the uptake of nitrates, as well as other nutrients rendered soluble through digestion of the worms to remediate water to levels sufficient to be safely returned to the environment; alternatively the water may be remediated to higher nitrate levels in the absence of plants so that the water can be used in subsequent fertilization operations outside the waste treatment system. The system further includes cultivated microbial populations that may be present in the media beds and/or in separate bioreactors within the system.

US2005133442A1 discloses a system for processing sewage into vermicompost includes a holding tank for receiving and initially processing the sewage. A treatment tank, connected to the holding tank by a first pipe, is used for treating the initially processed sewage from the holding tank to ensure optimal pH, percent of solids, and electrical conductivity of the sewage. A distribution tank, connected to the treatment tank by a second pipe, is used for heating or cooling the sewage from the treatment tank as necessary. A distribution apparatus, connected to the distribution tank by a third pipe, distributes the sewage to a vermicular environment, wherein the vermicular environment contains a plurality of worms which digest the distributed treated sewage into vermicompost.

The known prior art which uses biological approaches to process wastes requires extensive processing of the waste before biofiltration, and quite frequently requires complementary techniques for improving quality of biofiltered wastewater. Besides, biofilters are overly sensitive to changes in wastewater parameters, like pH, temperature, and total suspended solids (TSS), among others, requiring a continuous management of the wastewater feed to operate efficiently. This usually results in a complex operation and high operational and maintenance cost, which are the main barrier for implementing biofiltration technologies.

Consequently, there is a need for a system and a method specifically designed for monitoring and control of wastewater biofiltration, being integrated in a wastewater biofiltration system that solves the prior art problems.

### SUMMARY OF THE INVENTION

For overcoming the above issues, the invention proposes a wastewater biofiltration system with an integrated system for monitoring and control of the wastewater biofiltration, said wastewater biofiltration system comprising:
- a wastewater source, configured to provide a wastewater main flow;
- an equalization unit downstream of the wastewater source, configured to receive the wastewater main flow in a controllable manner and to adjust parameters of the wastewater obtaining a wastewater feed suitable for biofiltration, wherein the equalization unit comprises at least one equalization tank comprising:
   ∘ at least one wastewater inlet;
   ∘ at least one wastewater feed outlet; and
   o at least one wastewater level sensor;
- a mixing unit, configured to extract a wastewater portion from the equalization unit, measure and adjust parameters of the wastewater portion, and deliver the wastewater portion with adjusted parameters to the equalization unit, wherein the mixing unit comprises:
   ∘ a first impulsion subunit;
   ∘ at least one pH sensor;
   ∘ at least one Total Suspended Solids (TSS) sensor; and
   ∘ at least one additive injection location for additive injection from at least one additive source;
- a pumping unit downstream the equalization unit, configured to extract the wastewater feed from the equalization unit and deliver the wastewater feed to a biofiltration unit, initiating wastewater feed cycles, wherein the pumping unit comprises a second impulsion subunit and at least one wastewater feed flowmeter;
- a biofiltration unit downstream the pumping unit, configured to receive the wastewater feed over at least one biofiltration bed, biofilter the wastewater feed and deliver biofiltered wastewater;
- a biofiltered wastewater discharge downstream the biofiltration unit, configured to receive the biofiltered wastewater;
- a recirculation unit, configured to extract a biofiltered wastewater portion from the biofiltered wastewater discharge and to deliver the biofiltered wastewater portion to the equalization unit, wherein the recirculation unit comprises at least one recirculation valve and/or a third impulsion subunit, and wherein the recirculation unit further comprises at least one recirculation flowmeter; and
- at least one controller in communication with the equalization, mixing, pumping and recirculation units.

The at least one controller of the system is specially designed to control wastewater biofiltration, being configured to:
- enable or disable the input of the wastewater main flow to the equalization unit, by means of wastewater level data measured by the at least one wastewater level sensor;
- operate the first impulsion subunit based on predefined mixing operation times or based on pH data of the wastewater portion measured by the at least one pH sensor of the mixing unit, wherein the predefined mixing operation times are stored in the at least one controller;
- adjust parameters of the wastewater portion extracted by the mixing unit, by means of the pH data and the operation of the at least one additive injection location;
- operate the second impulsion subunit based on predefined wastewater feed operation times, a wastewater feed volume or an absolute value of solids, wherein the predefined wastewater feed operation times are stored in the at least one controller, the wastewater feed volume is obtained by means of the at least one wastewater feed flowmeter and the absolute value of solids is obtained by means of data from the at least one TSS sensor and the volume delivered by the at least one wastewater feed flowmeter; and
- operate the at least one recirculation valve and/or the third impulsion subunit based on a predefined quantity of biofiltered wastewater to be recirculated to the equalization unit and recirculation volume measured by the at least one recirculation flowmeter.

In addition, the invention further proposes a wastewater biofiltration method with an integrated monitoring and control of wastewater biofiltration, said wastewater biofiltration method comprising
- receiving, from a wastewater source, a wastewater main flow in an equalization unit downstream the wastewater source, wherein said equalization unit receives the wastewater main flow in a controllable manner and adjusts wastewater parameters obtaining a wastewater feed suitable for biofiltration, and wherein the equalization unit comprises at least one equalization tank comprising:
   ∘ at least one wastewater inlet;
   ∘ at least one wastewater feed outlet; and
   ∘ at least one wastewater level sensor;
- extracting a wastewater portion from the equalization unit by means of a mixing unit, wherein the mixing unit comprises:
   ∘ a first impulsion subunit;
   ∘ at least one pH sensor;
   ∘ at least one Total Suspended Solids (TSS) sensor; and
   ∘ at least one additive injection location for additive injection from at least one additive source;
- measuring and adjusting parameters of the wastewater portion by means of the mixing unit;
- delivering the wastewater portion with adjusted parameters to the equalization unit,
- extracting, from the equalization unit, the wastewater feed by means of a pumping unit downstream the equalization unit, wherein the pumping unit comprises a second impulsion subunit and at least one wastewater feed flowmeter;
- delivering the wastewater feed to at least one biofiltration bed of a biofiltration unit, initiating wastewater feed cycles;
- receiving the wastewater feed in the biofiltration unit downstream the pumping unit, wherein said biofiltration unit biofilters the wastewater feed and delivers biofiltered wastewater;
- receiving the biofiltered wastewater in a biofiltered wastewater discharge downstream the biofiltration unit;
- extracting a portion of the biofiltered wastewater from the wastewater discharge by means of a recirculation unit, wherein the recirculation unit comprises at least one recirculation valve and/or a third impulsion subunit, and wherein the recirculation unit further comprises at least one recirculation flowmeter; and
- delivering the biofiltered wastewater portion to the equalization unit.

By means of at least one controller in communication with the equalization, mixing, pumping and recirculation units, the method further comprises that the at least one controller:
- enables or disables the input of the wastewater main flow to the equalization unit, by means of wastewater level data measured by the at least one wastewater level sensor;
- operates the first impulsion subunit based on predefined mixing operation times or based on pH data of the wastewater portion measured by the at least one pH sensor of the mixing unit, wherein the predefined mixing operation times are stored in the at least one controller;
- adjusts parameters of the wastewater portion extracted by the mixing unit, by means of the pH data and the operation of the at least one additive injection location;
- operates the second impulsion subunit based on predefined wastewater feed operation times, a wastewater feed volume or an absolute value of solids, wherein the predefined wastewater feed operation times are stored in the at least one controller, the wastewater feed volume is obtained by means of the at least one wastewater feed flowmeter and the absolute value of solids is obtained by means of data from the at least one TSS sensor and the volume delivered by the at least one wastewater feed flowmeter; and
- operates the at least one recirculation valve and/or the third impulsion subunit based on a predefined quantity of biofiltered wastewater to be recirculated to the equalization unit and recirculation volume measured by the at least one recirculation flowmeter.

The wastewater main flow is external to the invention and may came from different wastewater sources like a dairy farm. Therefore, enabling the input of the wastewater main flow means allowing said flow to feed the equalization unit, in particular, allowing said flow to enter the at least one equalization tank from its source. On the other hand, disabling said input of wastewater main flow means stop feeding the equalization unit, for instance, by diverting the wastewater main flow to an external auxiliary pond or sump, shutting down the wastewater main flow from its source or any other applicable mean.

According to an embodiment of the invention, suspended particles greater than a predefined size of suspended particles are removed from the wastewater main flow, by means of a filtration unit upstream the equalization unit. The filtration unit comprises at least one filter, preferably, at least two filters with one of them as a spare part, to avoid stopping the process in case of clogging. Preferably, the at least one filter is a mesh filter, and the predefined size of suspended particles to be removed is of 1-3 mm, which may generate clogging or damage the pumping unit feeding the biofiltration unit or any impulsion subunits like wastewater pumps. Alternatively, the filtration unit comprises at least one filtration pressure sensor, which can be located at the top of the filter for detecting clogging by means of flow pressure changes. The at least one controller is further in communication with the filtration unit and, if the at least one filtration pressure sensor measures a filtration pressure greater than a predefined filtration pressure threshold, under an undesired pressure scenario, the invention further comprises that the at least a controller:
- disables the main wastewater flow;
- bypasses the wastewater main flow directly to the equalization unit; or
- when the filtering unit comprises two or more filters and a first filter has triggered the filtration pressure sensor, activates a redirecting valve that redirects the wastewater main flow to a second filter.

Alternatively, the occurrence of an undesired pressure scenario activates the issuance of an alarm by the at least one controller, said alarm can be a visual alarm trough a known visualization means, like a warning light in a control panel or a wireless message communicated to a User Equipment and/or to a server in a network. Other types of alarms like sound alarms are also implementable. In case of filter failure due to clogging, the clogged filter is cleaned manually, but any applicable solution for automating cleaning can be implemented.

According to an embodiment of the invention, the wastewater level sensor is an ultrasonic sensor or other applicable sensor capable of measuring the instantaneous distance from the highest part of the at least one equalization tank to a wastewater surface inside said equalization tank. Then, the equalization tank may also include:
- at least one low level switch;
- at least one medium level switch with high and low positions; and
- at least one high level switch;

In view of the above, the invention further comprises that the at least one controller:
- deactivates the first, second and/or third impulsion subunits if the low-level switch is activated;
- enables the wastewater main flow from the wastewater source if the mid-level switch is activated in the low position;
- disables the wastewater main flow from the wastewater source if the mid-level switch is activated in the high position; and
- disables the wastewater main flow from the wastewater source if the high-level switch is activated.

The combination of level sensors and switches in the at least one equalization tank provides relevant main flow data about the behavior of the wastewater main flow, which can be used to better adapt the operation of the wastewater biofiltration process to the fluctuations of the wastewater main flow form the source. In fact, said main flow data can be used to identify a daily or weekly operational sequence, improving efficiency of the biofiltering process by adapting the different units of the system to the fluctuations of the main flow.

According to an embodiment of the invention, the mixing unit comprises at least one mixing line that is arranged close to a bottom of the at least one equalization tank, preferably, in the lower third of the at least one equalization tank, wherein:
- The extraction of the wastewater portion from the equalization tank is conducted in an extraction section of the at least one mixing line, by means of the first impulsion subunit; and
- The measurement and adjustment of parameters of the wastewater portion is conducted in a measurement and adjustment section of the at least one mixing line, wherein the measurement and adjustment section comprises the at least one pH sensor, the at least one TSS sensor and the at least one additive injection location.

Besides, the invention further comprises introducing air to the wastewater portion in an aeration section of the at least one mixing unit, obtaining an aerated wastewater portion; and delivering the portion of wastewater with adjusted parameters and aerated is conducted in an injection section inside the at least one equalization tank. In this case, the mixing unit is designed to improve mixture of additives in the mixing line, delivering or distributing the mixture of wastewater portion and additives inside the at least one equalization tank in the more uniform and homogenous manner. Besides, the mixing unit can incorporate oxygen to the extracted wastewater portion, which is in turn introduced into the at least one equalization tank. The introduction of oxygen is directed to ensuring an aerobic condition of the wastewater to be filtered and improves odor control when deemed necessary. Ultimately, the main aims of the mixing unit are: i) transporting the additives to the wastewater inside the equalization tank before entering the biological process, and ii) preventing decantation of solids inside the equalization tank, keeping solids floating to ensure that they pass to the biological process. In view of the above, the predefined mixing operation times are set to fulfill said main aims of the mixing unit, leading to obtain a uniform wastewater feed from the equalization unit.

Alternatively, the first impulsion subunit is a mixing pump, the aeration section comprises a Venturi device that extracts atmospheric air and the injection section comprises a distribution ring with mixing injectors within the at least one equalization tank. Then, by means of the Venturi device and the mixing injectors, mixing and distributing the aerated wastewater portion with adjusted parameters within the at least one equalization tank and adding oxygen within the at least one equalization tank are enhanced, obtaining a wastewater feed suitable for an efficient biofiltration. Preferably, the mixing injectors are designed to inject micro or nano bubble into the equalization tank.

According to an embodiment of the invention, the mixing unit further comprises the following features regarding its operation:
- the predefined mixing operation times comprise activation and deactivation intervals of the first impulsion subunit, said intervals being of between 7 to 30 minutes, preferably of 10 minutes. Activating the mixing unit introduces a continuous wastewater movement into the equalization tank, improving mixture of the additives and obtaining a constant wastewater feed suitable for biofiltration. However, said approach increases energy consumption. Therefore, the activation and deactivation intervals are the best approach for ensuring obtaining a wastewater feed suitable for biofiltration at the minimum energy consumption.
- when the at least one pH sensor measures a pH level lower than 5.5 or greater than 9.0, preferably lower than 6.0 or greater than 8.5, the invention comprises that the at least one controller:
   ∘ activates the first impulsion subunit;
   ∘ activates the injection of at least one pH regulating additive via the at least one additive injection location; and
   ∘ deactivates the second impulsion subunit.

Then, when the at least one pH sensor measures a pH level within the range 5.5-9.0, preferably within 6.0-8.5, the invention further comprises that the at least one controller:
- deactivates the injection of the at least one pH regulating additive; and
- deactivates the first impulsion subunit with a predefined delay time, to ensure the mixing of the wastewater within the equalization unit with the wastewater portion with adjusted parameters, obtaining the wastewater feed suitable for biofiltration. The predefined delay time can be of between 3 to 7 minutes, preferably of 5 minutes, avoiding that unmixed additive reach the biofiltration unit. When the mixing unit operates injecting the additives into the wastewater portion within said delay time, the pumping unit extraction wastewater from the equalization tank is deactivated, stopping feeding the biofiltration unit.

According to an embodiment of the invention, the measurement and adjustment section comprises:
- one or more additional sensors configured to measure electric conductivity (EC), temperature, Oxidation-Reduction Potential (ORP) and/or pressure of the first impulsion subunit; and
- additional additive injection locations configured to adjust parameters of the wastewater portion based on odor control and/or larvae and fly control, and/or to supplement bacteria to the biofiltration unit.

According to an embodiment of the invention, that the at least one additive source corresponds to at least one additive tank, preferably, one additive tank for each additive, wherein the at least one additive tank comprises a metering pump that injects at least one additive by means of the at least one controller, wherein each additive tank comprises at least one additive level sensor that emits alerts regarding an amount of remaining additive. If no additive remains in the additive tanks and the pH level is outside the operational range, the controller can stop operation of the system. The additive tanks can include a stirring device controlled by the controller of the invention, avoiding clogging or decantation of the additive inside the tanks.

According to an embodiment of the invention, the second impulsion subunit corresponds to wastewater feed pumps which quantity and capacity are defined based on a wastewater feed surface of the biofiltration unit, including an additional wastewater feed pump in case of failure. In addition, the at least one controller activates a sequence of activating the wastewater feed pumps alternately for each wastewater feed cycle, based on the predefined wastewater feed operation times, the wastewater feed volume, or the absolute value of solids.

Besides, the pumping unit can comprise at least one wastewater feed pressure sensor downstream each wastewater feed pump. Then, the invention further comprises that the at least one controller deactivates each wastewater feed pump if the at least one wastewater feed pressure sensor measures a wastewater feed pressure greater than a predefined wastewater feed pressure threshold. In addition, the pumping unit can comprise a manifold downstream the at least one wastewater feed pressure sensor. Then, the invention further comprises that the manifold unifies the pressure of the wastewater feed before the biofiltration unit, wherein the manifold comprises a wastewater feed inlet for each wastewater feed pump and an outlet. Finally, the at least one wastewater feed flowmeter of the pumping unit can be arranged at the outlet of the manifold and upstream a wastewater feed line that delivers wastewater feed to the biofiltration unit.

Alternatively, the at least one biofiltration bed comprises at least one moisture sensor, wherein the at least one controller is further in communication with the at least one moisture sensor and,
- if a moisture level of the at least one biofiltration bed is greater than a predefined moisture upper threshold, the method further comprises that the at least one controller deactivates the at least one wastewater feed pump and/or closes a respective electrovalve, or
- if a moisture level of the at least one biofiltration bed is lower than a predefined moisture lower threshold, the method further comprises that the at least one controller activates the at least one wastewater feed pump and/or opens a respective electrovalve.

According to an embodiment of the invention, the biofiltration unit comprises two or more biofiltration beds. The pumping unit can comprise an independent wastewater feed line for each biofiltration bed, where each line of wastewater feed comprises a wastewater feed pump and a respective electrovalve. Then, the invention further comprises that the at least one controller operates the opening and closing of each electrovalve with a delay time on the activation or deactivation of the respective wastewater feed pump, based on the predefined wastewater feed operation times, the wastewater feed volume, or the absolute value of solids. Preferably, each biofiltration bed is continuously feed with wastewater during 1 to 20 minutes within 1-hour intervals. Then, the alternative of having more than one biofiltration bed allows a sequential feeding of the biofiltration beds within each 1-hour interval, maximizing the wastewater biofiltration during the wastewater feed cycle.

According to an embodiment of the invention, the predefined wastewater feed operation times and setpoints for the wastewater feed volume, and the absolute value of solids are main control parameters defined and stored for each biofiltration bed of the biofiltration unit, for each wastewater feed cycle and for a daily total. The predefined wastewater feed operation times and the setpoints for the wastewater feed volume and the absolute value of solids are the main control parameters, being stored in the at least one controller. Preferably, said main control parameters are modifiable by an authorized user, having access to said controller directly or through a network.

According to an embodiment of the invention, the equalization unit, the mixing unit, the pumping unit, the recirculation unit and the at least one controller are, at least in part, included within a housing named control unit, optionally the control unit comprises a filtration unit within the housing and upstream the equalization unit and, when the equalization tank has a size grater of 3,785 liters (1,000 gallons), it can be placed outside the control unit, adjacent to the same. The control unit can be presented as shipping containers of 3.05, 6.10 or 12.19 metres (10, 20 or 40 feet), depending on the size and capacity of the at least one equalization tank. Said control unit is configured to manage: i) the wastewater requirement from source, ii) the preparation and adjustment of the wastewater before biofiltration, iii) the sequence and thresholds of how wastewater is feed to the biofiltration unit, and iv) the flow of biofiltered wastewater that is recirculated or that is discharged to a final discharge point. By means of piping, the control unit can be fluidly connected to the wastewater source, to the biofiltration unit, and to the biofiltered wastewater discharge. This arrangement allows a modular construction of a wastewater biofiltration system, having a single control unit for operating one or more biofiltration beds, which can be located adjacent the control unit or remotely. Besides, by means of this modular configuration it is possible to add biofiltration beds as separate units, if necessary, which is useful if the wastewater main flow from source increases and more biofiltration capacity is required.

Alternatively, the control unit further comprises at least one fan arranged on a roof of the housing, insulating elements arranged on walls of the housing, at least one heating device and/or at least one access door, generating an independent unit than can be easily constructed, transported, and installed. In fact, the electronics in the control unit, mostly related to the at least one controller, sensors, and actuators, can be energized connected to the grid, generators and/or solar panels. Overall, the system has a low energy consumption.

According to a preferred embodiment of the invention, the biofiltration units is based on biofiltration beds having worms as biofiltering means, and the at least one controller is configured to set wastewater parameters based on biofiltration using worms. Then, the invention catalyzes the digestive power of worms and microbes to rapidly filter out wastewater contaminants. Wastewater, applied intermittently to the biofiltration unit, percolates down through various medias where contaminants are trapped and digested by a biofilm. As worms burrow in search of solids, they create channels which aerate the system while their microbial rich castings propagate and nourish the microbial colonies consuming dissolved and soluble contaminants. When the wastewater hits the biofiltration unit floor, it drains out via exit pipes and can be reutilized for agricultural irrigation or discharged to sewers at reduced contaminant levels. The only thing left behind is a valuable byproduct: worm casting compost.

Among the advantages of the invention, it is important to highlight that it can operate year-round or seasonal, it is custom designed and scalable, it involves a four-hour biofiltering process, properly adjusted is mostly odorless and it has a low energy consumption, of approximately 0.00185 kWh per filtered liter (0.007 kWh per filtered gallon).

### BRIEF DESCRIPTION OF THE FIGURES

Fig. 1 shows a flowchart of an embodiment of the method and system of the invention.
Fig. 2 shows a schematic diagram of an embodiment of the control unit of the invention.
Fig. 3 shows a schematic diagram of a first embodiment of the wastewater biofiltration system of the invention.
Fig. 4 shows a schematic diagram of a second embodiment of the wastewater biofiltration system of the invention.
Fig. 5 shows a schematic diagram of a third embodiment of the wastewater biofiltration system of the invention.
Fig. 6 shows the general overview HMI display of the example of the invention.
Fig. 7 shows the pump control HMI display of the example of the invention.
Fig. 8 shows the pH control HMI display of the example of the invention.
Fig. 9 shows the HMI display with cycle and daily operation restrictions of the example of the invention.

### DESCRIPTION OF PREFERRED EMBODIMENTS

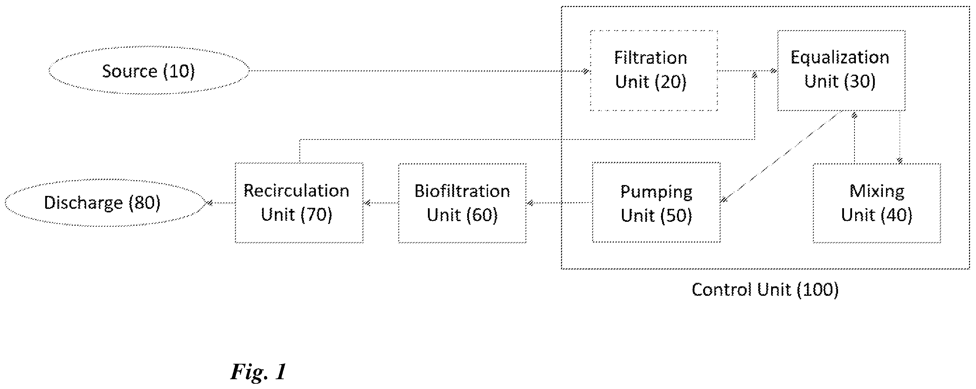

Fig. 1 shows a general flowchart of the main embodiment of the method and system of the invention. According to Fig.1 the system and its operation (method) comprises: a wastewater source (10); an equalization unit (30), receiving a wastewater main flow from the source (10); a mixing unit (40), extracting/delivering a wastewater portion from/to the equalization unit (30); a pumping unit (50), extracting a wastewater feed from the equalization unit (30); a biofiltration unit (60), receiving the wastewater feed from the pumping unit (50); a recirculation unit (70) for recirculating a portion of the biofiltered wastewater; and a biofiltered wastewater discharge (80). Optionally, the system also contemplates a filtration unit (20) downstream the source (10) and upstream the equalization unit (30). As shown in Fig. 1, the combination of the equalization unit (30), mixing unit (40), pumping unit (50) and, optionally, filtering unit (20) represent the so-called control unit (100), which can be materialized as an enclosure comprising all said units (20, 30, 40, 50).

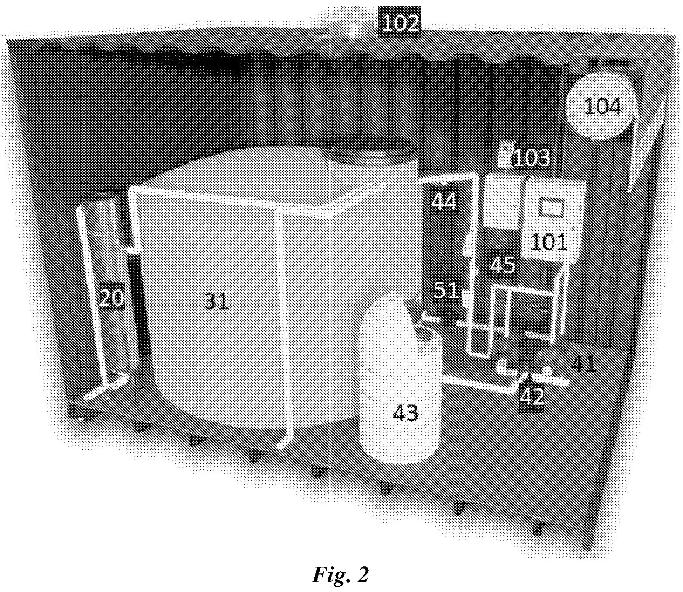

Fig. 2 shows a schematic diagram of an embodiment of the control unit (100), in which the following components are enclosed: an optional filtration unit (20); an equalization tank (31); a first impulsion subunit (41) or pumps of the mixing unit; pH and TSS sensors (42); an additive source (43); an additive injection location (44); an optional Venturi device (45); a wastewater feed flowmeter (51); a controller or PLC (101) in an enclosure; an optional overhead light and/or ventilation fan (102); an optional camera (103) and an optional access door or gate (104).

The control unit of Fig. 2 is presented as a shipping container, which size can be of 3.05, 6.10 or 12.19 metres (10, 20 or 40 feet), depending on the size and capacity of the at least one equalization tank. For instance, a control unit with a single equalization tank can be designed to process of up to 15,140 liters (4,000 Gallons) Per Day of wastewater. If larger volumes need to be processed, additional equalizations tanks might be required, which can be installed inside the control unit or, if required, arranged outside an existing control unit.

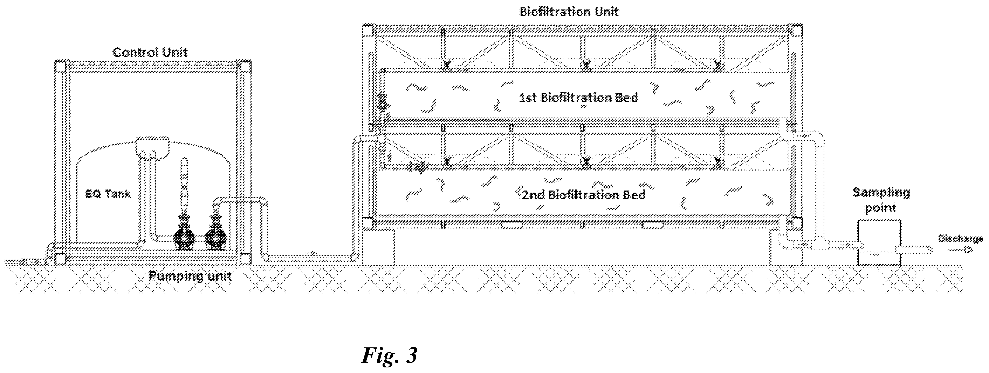

Fig. 3, 4 and 5 show three installation embodiments of the wastewater biofiltration system of the invention, including a control unit as in Fig. 2 and biofiltration beds housed in a shipping container forming a movable biofiltration unit. The first embodiment in Fig. 3 shows the control unit with an equalization tank (EQ tank) inside, fluidly connected to the pumping unit, said pumping unit fluidly connected to a biofiltration unit formed by two biofiltration beds connected in parallel and vertically staked one over the other. Then, by means of controlling the opening and closing of respective electrovalves upstream the biofiltration beds, different feeding configurations can be implemented. For instance, if there is a need of increasing the biofiltering capacity, the two beds can be feed simultaneously, operating in parallel. On the other hand, under regular operation it would be preferred to operate the two biofiltration beds alternately, operating sequentially.

As can be seen, the embodiment of Fig. 3 clearly shows that the biofiltration system can be modular, comprising a control unit fluidly connected to a biofiltration unit, both units presented as enclosures containing the essential components of the same, respectively. This arrangement is highly advantageous, allowing easy installation and adaptation to the industry wastewater processing requirements.

According to the embodiment of Fig. 3, an optional sampling point can be implemented downstream the biofiltration unit, for evaluating the biofiltration behavior or testing the biofiltered wastewater. Notwithstanding this, the data retrieved from the wastewater portion extracted by the mixing unit inside the control unit, which is processed inside the control unit by the controller, is the essential input required by the system and method of the invention to adjust the wastewater feed as required by the biofiltering process.

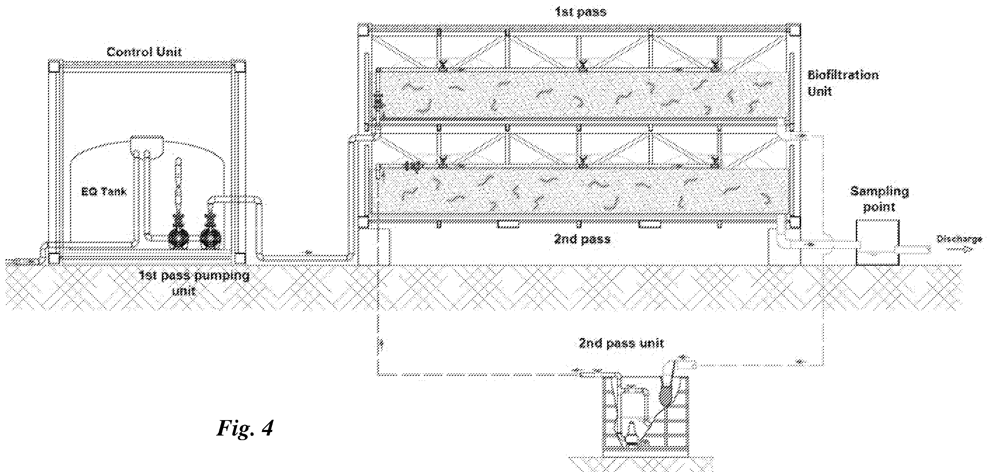

The embodiment of Fig. 4 comprises the same configuration of control and biofiltration units of Fig. 3, but with a different arrangement of the biofiltration beds housed by the biofiltration unit. In Fig. 4 the first and second biofiltration beds are arranged in series, wherein the wastewater feed from the pumping unit is directed to the first biofiltration bed for a first biofiltering pass and then the biofiltered wastewater from the first biofiltration bed is directed to the second biofiltration bed for a second biofiltering pass prior to discharge. As shown in Fig. 4, the second pass can be managed by a second pass unit, in charge of receiving the biofiltered wastewater from the first pass and feeding said biofiltered wastewater to the second biofiltration bed. Said second pass unit can be formed by a vessel or tank of similar purpose of the EQ tank, having an impulsion subunit for feeding the second pass to the second biofiltration bed.

The arrangement of the wastewater system of Fig. 4, in which at least two biofiltration processes are performed, is suitable for improving biofiltration and/or for implementing two different biofiltration approaches. For instance, the first biofiltration bed can be based on vermifiltration with a population of earthworms and bacteria adapted to process wastewater with coarse solids, and the second biofiltration bed can be based on vennifiltration with earthworms and bacteria adapted to process wastewater with fine solids. Besides, the second pass unit can include a filter and other components to adapt the received biofiltered wastewater to the required conditions of the second biofiltration bed. The filtration time of each biofiltration bead (residence time of wastewater in the biofiltration bead) is usually between 1 to 4 hours.

The filtration time varies according to the design of the biofiltration bead, for instance, in biofiltration beds based on earthworms and bacteria inoculated in a medium of cellulosic particles, said time mostly depends on the height of the biofiltration bead and size of the cellulosic particles (fine sawdust, wood shavings, wood chips, almond shells, among others).

Similar to Fig. 3, the embodiment of Fig. 4 can include a sample point for testing the quality of the biofiltered wastewater after the biofiltration unit.

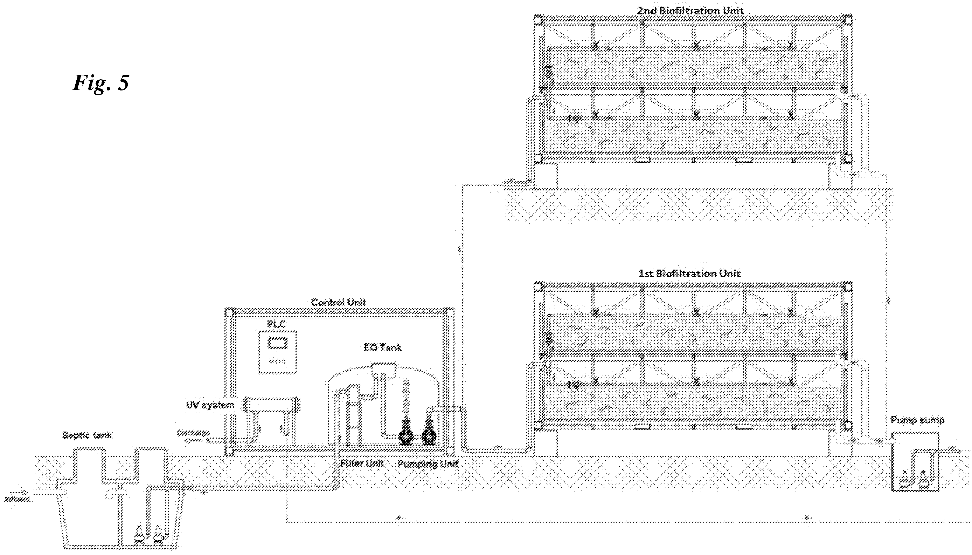

Finally, the embodiment of Fig. 5 represents a wastewater biofiltration system comprising a septic tank as a wastewater source. In this case, the control unit comprises the controller (LCT), a filter representing the filtration unit, an EQ tank representing the equalization unit and two pumps representing the pumping unit. A wastewater main flow from the septic tank is received by the filter unit for removal of coarse solids from said main flow. Then, the filtered main flow is received by the EQ tank, for obtaining a wastewater feed suitable for biofiltration. Said wastewater feed is pumped to the biofiltration unit by means of the pumping unit. In this embodiment, the biofiltration system comprises two biofiltration units, each having two biofiltration beds. The two biofiltration units are arranged in parallel and can be connected or disconnected from the system depending on the biofiltration requirements.

As shown in Fig. 5, the biofiltration system can also implement a pump sump connected to the discharge of the biofiltration units, redirecting the biofiltered wastewater to further processing, in this case to a UV system in the control unit, implementing an UV treatment to disinfect the biofiltered wastewater stream, inactivating bacteria in said stream. Other further processing units can be implemented to the biofiltration system, preferably housed in the control unit as in Fig. 5.

The wastewater biofiltration system and method of the invention, integrating the system and method for monitoring and control wastewater biofiltration with an operational architecture specially designed to improve biofiltration management, optimize the operational parameters of the biofiltering process, achieving better efficiencies with enhanced treatment capacities when compared to common biofiltration systems. Table 1 shows the removal efficiencies of the invention, evaluated over the discharge, including data about biological oxygen demand (BOD5), Total Suspended Solids (TSS), Nitrogen (Total Kjeldahl Nitrogen, TKN), Ammonia and Phosphorus.

**Table 1: Removal Efficiencies**

| | |
|---|---|
| BOD5 | 85 - 99% |
| TSS | 85 - 99% |
| TKN | 40 - 99% |
| Ammonia | 60 - 99% |
| Phosphorus | 35 - 95% |

In addition, by means of the invention, the treatment capacity of the biofiltering process is increased, presenting an average treatment capacity as show in Table 2, depending on the BOD5 of the wastewater main flow from the source, or influent.

**Table 2 Average treatment Capacity**

| Influent BOD5 [mg/l] | Liters (Gallons) Per Day |
|---|---|
| 0 - ≤ 500 | ≤ 7,570 (≤ 2,000) |
| 500 - ≤ 1,000 | ≤ 5,680 (≤ 1,500) |
| 1,000 - ≤ 6,000 | ≤ 2,270 (≤ 600) |
| > 6,000 | ≤ 1,140 ( ≤ 300) |

Finally, the biofiltration unit operated by means of the system and method of the invention can be specially designed to enhance the biofiltration process and to propose a modular configuration capable of increasing the treatment capacity as shown in Fig. 5, taking advantage of the monitoring and control capabilities of the invention. Table 3 shows the specification of each biofiltration unit of Fig. 5, specially designed to enhance earthworm and bacteria biotreatment capabilities during wastewater biofiltration.

**Table 3: Biofiltration Unit Specifications**

| | |
|---|---|
| Treatment Capacity | Varies by influent/effluent water quality, but most wineries and food processors will have a maximum daily capacity of 4,540 liters (1,200 gallons). |
| Effluent Water Quality | Single Pass design targets 90%+ contaminant removal while Double Pass design targets 99%+ removal |
| Influent Concentrations (per day) | BOD: 0 - 1 kg/m²; TSS 0 - 0.30 kg/m². Total Ammonia (NH3+) 0 - 0.075 kg/m²; Fats, Oil and Grease: 0 - 0.025 kg/m² |
| Worm Castings Generation | 7.65 cubic metres (10 cubic yards) per unit every ~ 18-36 months |
| Energy Demand | 0.0007 kWh/gal = 0.000185 kWh per litre (0.84 kWh to treat 1,200 gallons) per day. |

The influent concentrations of the biofiltration unit can be set as additional control parameters, for instance, by means of alarms alerting if the wastewater feed is meeting biofiltration design parameters. Other control parameters can be used, like temperature, Oxidation-reduction Potential (ORP) and electric conductivity/conductance, wherein the temperature of the wastewater feed should be of up to 45°C, the ORP should be within the range of -400 - +200 mV, preferably above -150 mV, and the electric conductivity of the wastewater feed can be within 0-20 mS/cm.

The configuration of the biofiltration unit as a movable unit as shown in Fig, 3, 4 and 5 substantially increases the versatility of the biofiltration system, allowing multiple arrangements in which the control unit and one or more biofiltration units are fluidly connected through piping.

### EXAMPLE

The invention has been tested implementing the control architecture in a vermifilitration biofiltration system at Marlborough Vintners, New Zealand.

The at least one controller is a Programmable Logic Controller (PLC) with modular cards and connection via cellular VPN modem with Ethernet. A Human-Machine Interface (HMI) display is connected to the PLC to display the operation data of the system. The PLC can communicate the operation data to a cloud server via a VPN Router and can communicate with other devices utilizing a Modbus protocol (RS-232, RS-485, TCP), Ethernet/IP, or remote I/O on its remote port for integration or collaboration.

The system is automated using input feedback Proportional Integral Derivative (PID) control parameters such as pH, EC, TSS, temperature and flow monitoring to feed a precise amount of wastewater/loading to the biofiltration beds. Any abundance of the aforementioned parameters is detrimental to the overall health of the biofiltration beds and its worm inhabitants. Therefore, the system will smartly adjust irrigation dynamically with changing wastewater concentrations. All data are routinely transmitted to the cloud server for monitoring and storage. All data can be archived in the cloud for 7 years. Up to 1,000 data points are logged every hour.

### PLC: General Concepts

The PLC represents the brain of the system, including predefined settings involving main and secondary control parameters of the invention.

The PLC receives data from all sensors implemented in the biofiltration process, like pH sensors and flowmeters, and actuates the operation of the biofiltration process through control signals to operate mostly motorized valves (electrovalves) and motorized pumps (impulsion subunits or pumps).

When controlling the motors of valves and pumps, it is important to highlight that all motors in this example utilize a DOL (Direct Online) starter scheme. It is a combination of MMP (Manual Motor Protection), and a contactor inside of a power panel for calling a motor energize and de-energize. The MMP can be locked out utilizing a LOTO (Lock Out Tag Out) locking system. The MMP has a feedback aux contact for the PLC to recognize that a fault or disconnect has occurred on motor control motor circuit. This feedback allows the PLC to issue a fault/disconnect alert and bypass this motor in its automation routine.

All motor also has a field disconnecting means near and insight of the motor. The LOTO system should be utilized here as a means of disconnecting and servicing a motor. The MMP should also be switched to disconnect to alert the PLC that the motor is offline.

A motor tri-state button is included through the HMI display but is not a disconnect or lock out button. It has not function to lock out a motor. Physically disconnection as mentioned above is mandatory.

Besides, the PLC is connected to ta HMI display to allow configuration of the operation parameters and can communicate all information to a user interface remotely.

Additional details of the PLC and its operation are explained in connection to the definition of the HMI and user interactions.

### HMI: General Concepts

The operation data can be displayed trough the HMI, providing uncluttered information at a glance.

The HMI of the invention is an interface capable of displaying all operational data of the system and method, and it is the main platform for monitoring and control of the biofiltration process. In this example, the HMI provides three levels of interaction, as follows:
- Level 1: Overview Display, providing a general overview of the operational data, showing information and trends as to the health of the biofiltration system. Provides a clear and easy to understand input to technicians about the operation and health of the system.
- Level 2: Process Unit Control Display, providing a detailed overview of specific operational data.
- Level 3: Process Unit Limit Stops, providing access to specific settings related to wastewater feed cycles and daily totals, setting the operational parameters for feeding of the biofilter beds of the biofiltration system.

### HMI Display: Tanks

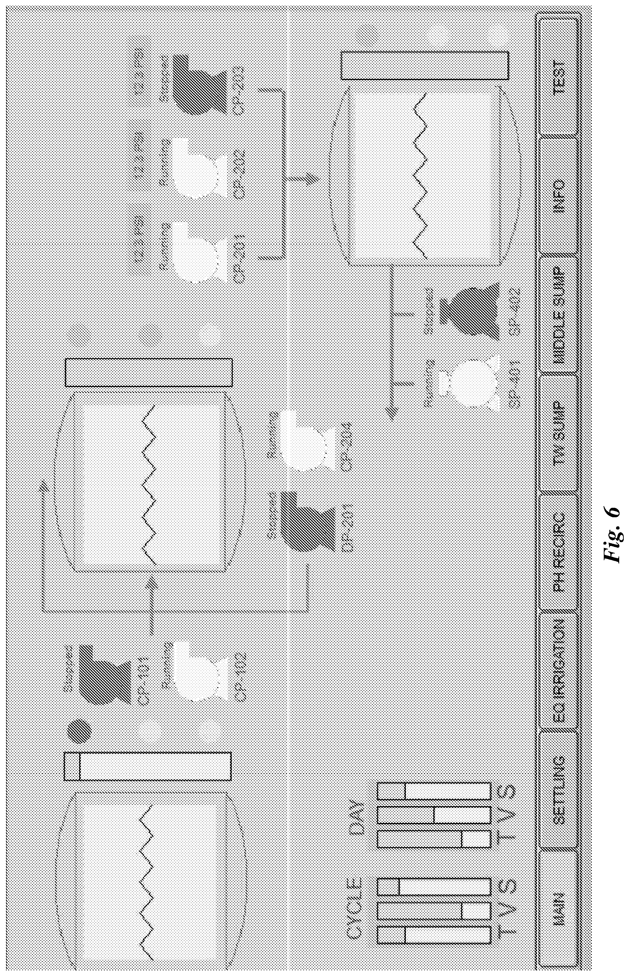

Fig. 6 shows a level 1 display of the HMI, in which three tanks, vessels or sumps are presented. A first tank represents a settling tank, vessel, or sump, as the wastewater source. The second tank represents the equalization tank, being feed from the source with two pumps operating alternately. The third tank represents treated water sump, being feed by three pumps after the biofiltration unit.

Through the HMI, Tanks, Vessels and/or Sumps represented in the system have trends lines for showing the level over a period of time, as shown inside each tank, vessel, or sump in Fig. 6. The trend lines help to identify the rate over time of filling and drawing down wastewater from a vessel and or two a vessel. In Fig. 6 it is possible to note that a bar graph representing the current level inside each tank, vessel or sump is shown to the right of the trend lines (right side of the represented tank, vessel, or sump).

In this case, the level inside one tank is represented by means of level switch indicators, like a float switch indicator, representing the operation of the low, mid, and high-level switches, wherein said switches can be float switches. In Fig. 6 the sets of three floats switches (Low, Mid/Control and High) are represented by three dots at the right of the bar graphs. As shown in Fig. 6, the dots are colored as an indication of the level inside each tank, vessel, or sump, as follows:
- Gray - The float is in the Down position
- Light Blue - The float is in Up position
- Red - Attention is needed, the high float is in the Up position. Overflow may occur.

Besides, each impulsion subunit (pump) is represented by a dynamic pump object. When the pump is ON/Energized/Running it is shown with a white color and the word "Running" appears above. When the pump is Off/De-Energized/Stopped it is shown with a gray color and the word "Stopped" appears appear above. Said configuration is shown in Fig. 6.

Level controls of the sumps, tanks, and/or vessels are done by two kinds of sensors. Discrete flow switches (Low, Mid and High floats described above) and analog ultrasonic level sensors. All float switches are NO (normally opened), and the operation is as follows:
- Float Down - Opened contact.
- Float UP - Closed contact.
- Low float switches - Prevents pumps from running dry.
- Mid/Control float switches - Used to require wastewater from source to fill up or drawdown depending on the function of the pumps.
- High float switches - Shut down a pump to prevent overfilling a vessel or calling a pump to fill up a tank.

The float switches contemplate fuse state feedback for set of floats, which monitors if the control power common which feeds the floats has a blown fuse. This prevents a false positive on the series of floats switches should this fuse be blown.

On the other hand, Ultrasonic Level Sensors (ULS) are not used for process controls at startups. They are however used for level monitoring and logging. However, when averaging and logging confirms ULS are good in a given location, providing reliable real-time tank level data, they will be brought to control pumps, and the float switches will move to secondary backups. In this case, all ultrasonic sensors are of Flowline DL-24-00 model. Utilizing a portable storage means, like a USB fob, an onsite operator can calibrate the ULS through a software.

Finally, when a treated water sump is implemented, as in this case, the treated water sump is a draw down sump with one or more pumps (two pumps as represented in Fig. 6). The low-level float switch is the lead float switch. This will turn ON one pump at a time. The mid-level float switch is the lag float and call for the second pump to turn ON if activated.

In normal operating condition the low-level float switch alternates between pumps if both sump pumps are in AUTO mode.

The high-level float switch will give an alarm and stop wastewater feed from sending more water to the treated water sump. Once the high-level float has been cleared, the wastewater feed cycle can continue.

### Pump logic (HMI and operation)

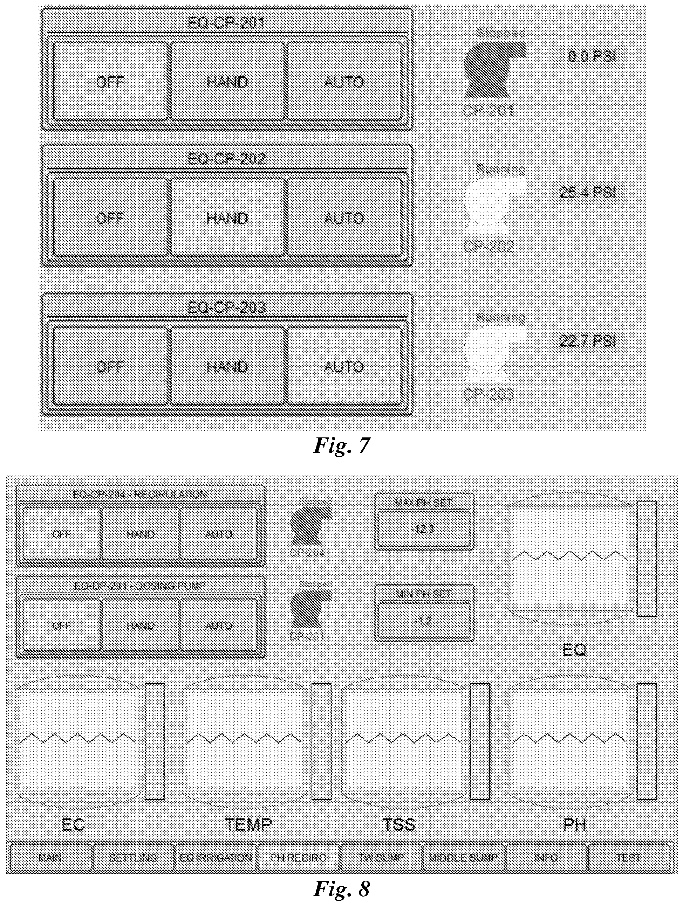

All controls of impulsion subunits or pumps are on level 2 screens of their respective location block in the HMI. A tri-state button of the motor control represents the three states in which a pump can be placed in, as shown in Fig. 7.
- OFF - The pump is in its OFF mode. The pump is OFF and de-energized.
- HAND - The motor is in Manual Mode. The pump is ON/energized/running. All floats and operational architecture can be ignored.
- AUTO - The pump is in Automatic Mode. The pump can be turned on by the PLC intermittently. Caution must be taken as the pump can and will turn on at any given time without notice.

The pumps feeding the equalization unit from source, in this case, from an external settling tank, are controlled as follows:
- The call for wastewater signal from the settling tanks or wastewater source to the equalization tank is established when either of the equalization tank low or mid switches is in the down position.
- The drawdown of the settling tanks is priority, while the fill up of the equalization tank is secondary.
- To prevent the overflow of the settling tanks, at high switch level or ultrasonic level the pumps will send water to the equalization tank.
- Overflow of equalization tank is possible when settling tank is full.
- Pump alternate when the control parallel pumps is set to AUTO, each pump will alternate pumping to the equalization tank when the call for water signal by the equalization tank mid/control float in its down position and a fill cycle has occurred before.

The impulsion subunit or pump of the recirculation unit will turn on and off periodically according to the following conditions.
- During an equalization tank fill from the settling tank, and 5 minutes off delay after the last call for equalization tank fill or pH below or above a range of set points during fill and delay period.
- Periodically defined by last recirculation trailing edge. Normally 10 minutes OFF and 10 minutes On. The operation time presets for the impulsion subunit of the recirculation unit represent the predefined quantity of biofiltered wastewater to be recirculated to the equalization unit.

### Pump Logic: pH adjustment

When the pH adjustment system comprises a pH pump controlling the at least one additive being injected to the wastewater portion in the mixing unit, the system can inject a caustic or acid additive to bring the pH withing a defined range. The initial preferred pH set range is 6.0 to 8.5. This range can be set using the HMI, in this case, under PH RECIRC page of the HMI, as shown in Fig. 8. According to this example, the pH injection system will not initiate if the recirculation pump is not active. The PLC monitors that the recirculation pump is energized and ON by monitoring the status of the associated motors.

Fig. 8 also shown a representation of the equalization tank (EQ) with trend lines inside. Besides, the same tank is represented in connection to the trend lines representing the electric conductivity (EC), temperature (TEMP), Total Suspended Solids (TSS) and pH (PH) as measured by the system, when applicable.

### Pump Logic: Irrigation or wastewater feed

In this case, the pumping system feeding the biofiltration unit is formed by three wastewater feed pumps. When all three pumps are set into AUTO, the pumps will alternate with two pumps ON and one pump OFF every wastewater feed cycle (see Fig. 6). When two pumps are on AUTO both pumps will feed every cycle. The system works on a 2+1 pump configuration. Normally, wastewater feed cycles occur at the top of each 1-hour interval and at 30 minutes pass the 1-hour interval.

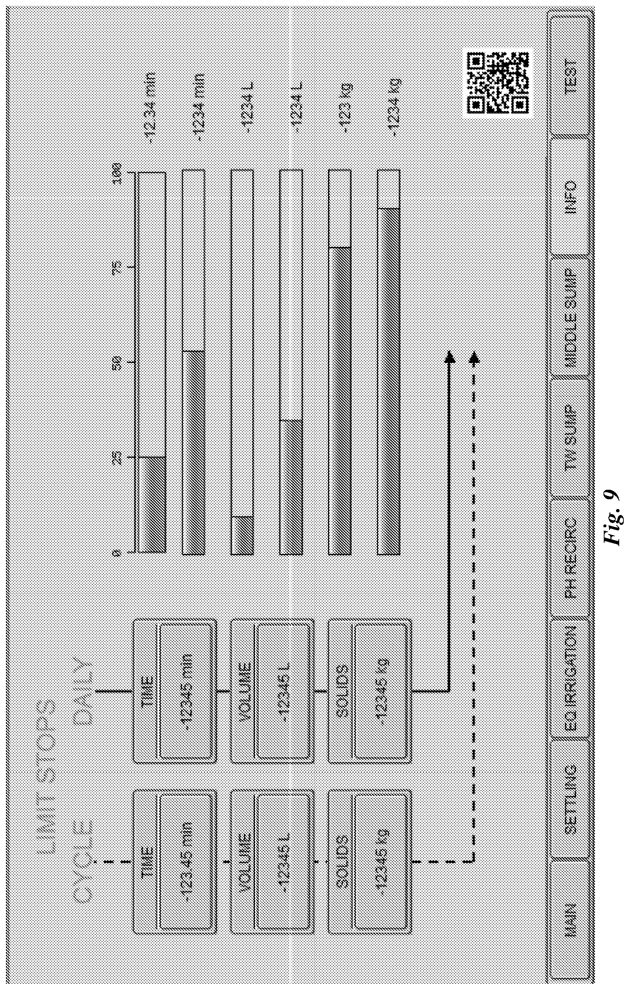

The wastewater feed is defined by restrictions or operational limits of the invention, which are represented by the predefined wastewater feed operation times and setpoints for the wastewater feed volume and absolute value of solids, as set in the INFO screen of the HMI, for each cycle and for a daily total (see Fig. 9).

Predefined wastewater feed operation times: Every cycle has a maximum amount or limit of time the wastewater feed pump can run for. Likewise, there is a daily accumulated maximum or limit amount of time the wastewater feed pump can run for. The component responsible for monitoring said maximum amounts or limits is a timer and a RTC (real time clock) in the PLC.

Preferably, each biofiltration bed is continuously feed with wastewater during 1 to 20 minutes within 1-hour intervals (cycle). The predefined operation time can be set depending on the design of the filtration system and operational conditions, like ambient temperature.

Wastewater feed volume: Each cycle has a maximum or limit volume of wastewater the wastewater feed pump can feed. Likewise, there is a daily accumulated maximum or limit volume of wastewater the wastewater feed pump can feed. Said maximum volumes are defined as setpoints for the wastewater feed volume. The component responsible for obtaining the data related to said setpoints and allowing the monitoring of said limits is the at least one wastewater feed flowmeter of the biofiltration unit, giving a pulse signal to the PLC.

Absolute value of solids: Every cycle has a maximum amount or limit of suspended solids each biofiltration bed can receive. The wastewater feed ceases for the cycle when the measured total suspended solids value has reached the absolute value of solids setpoint for each cycle. Likewise, there is also a daily limit setpoint for solids. Wastewater feed for the day stop once this daily limit is reached. For every liter, the total solid load is calculated based on the TSS concentration of the TSS sensor. The mass of this solids is added to each cycle and daily, registering totalized solid loads.

According to an embodiment of the invention, the daily limit setpoint can be defined as any value, preferably up to 0.3 kg per square-meter of the biofiltration beds (effective processing area of the beds), selected depending on the design of the biofiltration system.

### Limits Monitoring and Control

In the HMI, the restrictions defined above are represented using the term "TVS", for "Time", "Volume" and "Solids" (see Fig. 6), which are the three main limiting stop factors for the wastewater feed control system. In the Level 1 Overview Main Screen, in the lower left corner of the HMI (Fig. 6) is the TVS bar graphs. It will display in real time percentage left for the current cycle, or of the last completed cycle. Whichever is current. The daily bar graph will display the current percentage of Total Time, Volume, and Solids as a percentage of its daily limit.

The Level 3 INFO Screen of the HMI also display the same TVS bar graphs, with a larger resolution (see Fig. 9). These limit factors can be set according to a wastewater filtration contract and can be passcode locked. Remote monitoring will keep track of when these parameters are changed and who changed them. Access is strictly limited.

## Claims

1. A wastewater biofiltration system with an integrated system for monitoring and control of the wastewater biofiltration, wherein the wastewater biofiltration system comprises:
- a wastewater source (10), configured to provide a wastewater main flow;
- an equalization unit (30) downstream of the wastewater source (10), configured to receive the wastewater main flow in a controllable manner and to adjust parameters of the wastewater obtaining a wastewater feed suitable for biofiltration, wherein the equalization unit (30) comprises at least one equalization tank (31) comprising:
∘ at least one wastewater inlet;
∘ at least one wastewater feed outlet; and
∘ at least one wastewater level sensor;
- a mixing unit (40), configured to extract a wastewater portion from the equalization unit (30), measure and adjust parameters of the wastewater portion, and deliver the wastewater portion with adjusted parameters to the equalization unit (30), wherein the mixing unit (40) comprises:
∘ a first impulsion subunit (41);
∘ at least one pH sensor (42);
∘ at least one Total Suspended Solids (TSS) sensor (42); and
∘ at least one additive injection location (44) for additive injection from at least one additive source (43);
- a pumping unit (50) downstream the equalization unit (30), configured to extract the wastewater feed from the equalization unit (30) and deliver the wastewater feed to a biofiltration unit (60), initiating wastewater feed cycles, wherein the pumping unit (50) comprises a second impulsion subunit and at least one wastewater feed flowmeter (51);
- a biofiltration unit (60) downstream the pumping unit (50), configured to receive the wastewater feed over at least one biofiltration bed, biofilter the wastewater feed and deliver biofiltered wastewater;
- a biofiltered wastewater discharge (80) downstream the biofiltration unit (60), configured to receive the biofiltered wastewater;
- a recirculation unit (70), configured to extract a biofiltered wastewater portion from the biofiltered wastewater discharge (80) and to deliver the biofiltered wastewater portion to the equalization unit (30), wherein the recirculation unit (70) comprises at least one recirculation valve and/or a third impulsion subunit, and wherein the recirculation unit (70) further comprises at least one recirculation flowmeter; and
- at least one controller (101) in communication with the equalization, mixing, pumping and recirculation units (50, 70), configured to:
∘ enable or disable the input of the wastewater main flow to the equalization unit (30), by means of wastewater level data measured by the at least one wastewater level sensor;
∘ operate the first impulsion subunit (41) based on predefined mixing operation times or based on pH data of the wastewater portion measured by the at least one pH sensor (42) of the mixing unit (40), wherein the predefined mixing operation times are stored in the at least one controller (101);
∘ adjust parameters of the wastewater portion extracted by the mixing unit (40), by means of the pH data and the operation of the at least one additive injection location (44);
∘ operate the second impulsion subunit based on predefined wastewater feed operation times, a wastewater feed volume or an absolute value of solids, wherein the predefined wastewater feed operation times are stored in the at least one controller (101), the wastewater feed volume is obtained by means of the at least one wastewater feed flowmeter (51) and the absolute value of solids is obtained by means of data from the at least one TSS sensor (42) and the volume delivered by the at least one wastewater feed flowmeter (51); and
∘ operate the at least one recirculation valve and/or the third impulsion subunit based on a predefined quantity of biofiltered wastewater to be recirculated to the equalization unit (30) and recirculation volume measured by the at least one recirculation flowmeter.

2. The system of claim 1, **characterized in that** it further comprises a filtration unit (20) upstream the equalization unit (30), wherein the filtration unit (20) comprises at least one filter configured to remove suspended particles larger than a predefined size of suspended particles from the wastewater main flow; and **in that** the filtration unit (20) comprises at least one filtration pressure sensor, wherein the at least one controller (101) is further in communication with the filtration unit (20) and, if the at least one filtration pressure sensor measures a filtration pressure greater than a predefined filtration pressure threshold, the at least one controller (101) is further configured to:
- disable the wastewater main flow;
- bypass the wastewater main flow directly to the equalization unit (30); or
- when the filtering unit comprises two or more filters and a first filter has triggered the filtration pressure sensor, activate a redirecting valve configured to redirect the wastewater main flow to a second filter.

3. The system of claim 1, **characterized in that** the wastewater level sensor is an ultrasonic sensor configured to measure the instantaneous distance from the highest part of the at least one equalization tank (31) to a wastewater surface inside said equalization tank (31), and wherein the equalization tank (31) also includes:
- at least one low level switch;
- at least one medium level switch with high and low positions; and
- at least one high level switch;
wherein the at least one controller (101) is further configured to:
- deactivate the first, second and/or third impulsion subunits if the low-level switch is activated;
- enable the wastewater main flow from the wastewater source (10) if the mid-level switch is activated in the low position;
- disable the wastewater main flow from the wastewater source (10) if the mid-level switch is activated in the high position; and
- disable the wastewater main flow from the wastewater source (10) if the high-level switch is activated.

4. The system of claim 1, **characterized in that** the mixing unit (40) comprises at least one mixing line that is arranged close to a bottom of the at least one equalization tank (31), wherein the at least one mixing line comprises:
- an extraction section, configured to extract the wastewater portion from the equalization unit (30) by the first impulsion subunit (41);
- a measurement and adjustment section, configured to measure and adjust parameters of the wastewater portion, wherein the measurement and adjustment section comprises the at least one pH sensor (42), the at least one TSS sensor (42), and the at least one additive injection location (44);
- an aeration section, configured to introduce air to the wastewater portion and to obtain an aerated wastewater portion; and
- an injection section, configured to deliver the aerated wastewater portion with adjusted parameters inside the at least one equalization tank (31);
wherein the first impulsion subunit (41) is a mixing pump, the aeration section comprises a Venturi device (45) configured to extract atmospheric air and the injection section comprises a distribution ring with mixing injectors within the at least one equalization tank (31), wherein the Venturi device (45) and the mixing injectors are configured to mix and distribute the aerated wastewater portion with adjusted parameters within the at least one equalization pond and to add oxygen within the at least one equalization tank (31), obtaining the wastewater feed suitable for biofiltration

5. The system of claim 1, **characterized in that** the at least one additive source (43) corresponds to at least one additive tank, wherein the at least one additive tank comprises a metering pump configured to inject the at least one additive by the at least one controller (101), wherein each additive tank comprises at least one additive level sensor configured to emit alerts regarding an amount of remaining additive.

6. The system of claim 1, **characterized in that**:
- the second impulsion subunit corresponds to wastewater feed pumps which quantity and capacity are defined based on a wastewater feed surface of the biofiltration unit (60), including an additional wastewater feed pump in case of failure, wherein the at least one controller (101) is also configured to activate a sequence of activating the wastewater feed pumps alternately for each wastewater feed cycle and based on the predefined wastewater feed operation times, the wastewater feed volume or the absolute value of solids;
- the pumping unit (50) comprises at least one wastewater feed pressure sensor downstream each wastewater feed pump, wherein the at least one controller (101) is further configured to deactivate each wastewater feed pump if the at least one wastewater feed pressure sensor measures a wastewater feed pressure above a predefined wastewater feed pressure threshold;
- the pumping unit (50) comprises a manifold downstream the at least one wastewater feed pressure sensor, wherein the manifold is configured to unify the wastewater feed pressure before the biofiltration unit (60), the manifold comprises a wastewater feed inlet for each wastewater feed pump and one outlet; and
- the at least one wastewater feed flowmeter (51) of the pumping unit (50) is arranged at the outlet of the manifold and upstream a wastewater feed line configured to deliver wastewater feed to the biofiltration unit (60).

7. The system of claim 6, **characterized in that** the at least one biofiltration bed comprises at least one moisture sensor, wherein the at least one controller (101) is further in communication with the at least one moisture sensor and,
- if a moisture level of the at least one biofiltration bed is greater than a predefined moisture upper threshold, the at least one controller (101) is further configured to deactivate the at least one wastewater feed pump and/or to close a respective electrovalve, or
- if a moisture level of the at least one biofiltration bed is lower than a predefined moisture lower threshold, the at least one controller (101) is further configured to activate the at least one wastewater feed pump and/or to open a respective electrovalve.

8. The system of claim 1, **characterized in that** the biofiltration unit (60) comprises two or more biofiltration beds, wherein the pumping unit (50) comprises an independent wastewater feed line for each biofiltration bed, wherein each wastewater feed line comprises a wastewater feed pump and a respective electrovalve, wherein the at least one controller (101) is further configured to operate the opening and closing of each electrovalve with a delay time on the activation or deactivation of the respective wastewater feed pump, based on the predefined wastewater feed operation times, the wastewater feed volume or the absolute value of solids.

9. The system of claim 1, **characterized in that** the equalization unit (30), the mixing unit (40), the pumping unit (50), the recirculation unit (70) and the at least one controller (101) are, at least in part, included within a housing named control unit (100), optionally, the control unit (100) comprises a filtration unit (20) upstream of the equalization unit (30).

10. The system of claim 9, **characterized in that** the control unit (100) further comprises at least one fan and/or light (102) arranged on a roof of the housing, insulation elements arranged on walls of the housing, at least one heating device and/or at least one access door (104).

11. A wastewater biofiltration method with an integrated monitoring and control of wastewater biofiltration, wherein the wastewater biofiltration method comprises:
- receiving, from a wastewater source (10), a wastewater main flow in an equalization unit (30) downstream the wastewater source (10), wherein said equalization unit (30) receives the wastewater main flow in a controllable manner and adjusts wastewater parameters obtaining a wastewater feed suitable for biofiltration, and wherein the equalization unit (30) comprises at least one equalization tank (31) comprising:
∘ at least one wastewater inlet;
∘ at least one wastewater feed outlet; and
∘ at least one wastewater level sensor;
- extracting a wastewater portion from the equalization unit (30) by means of a mixing unit (40), wherein the mixing unit (40) comprises:
∘ a first impulsion subunit (41);
∘ at least one pH sensor (42);
∘ at least one Total Suspended Solids (TSS) sensor (42); and
∘ at least one additive injection location (44) for additive injection from at least one additive source (43);
- measuring and adjusting parameters of the wastewater portion by means of the mixing unit (40);
- delivering the wastewater portion with adjusted parameters to the equalization unit (30),
- extracting, from the equalization unit (30), the wastewater feed by means of a pumping unit (50) downstream the equalization unit (30), wherein the pumping unit (50) comprises a second impulsion subunit and at least one wastewater feed flowmeter (51);
- delivering the wastewater feed to at least one biofiltration bed of a biofiltration unit (60), initiating wastewater feed cycles;
- receiving the wastewater feed in the biofiltration unit (60) downstream the pumping unit (50), wherein said biofiltration unit (60) biofilters the wastewater feed and delivers biofiltered wastewater;
- receiving the biofiltered wastewater in a biofiltered wastewater discharge (80) downstream the biofiltration unit (60);
- extracting a portion of the biofiltered wastewater from the wastewater discharge (80) by means of a recirculation unit (70), wherein the recirculation unit (70) comprises at least one recirculation valve and/or a third impulsion subunit, and wherein the recirculation unit (70) further comprises at least one recirculation flowmeter; and
- delivering the biofiltered wastewater portion to the equalization unit (30);
wherein, by means of at least one controller (101) in communication with the equalization, mixing, pumping and recirculation units (50, 70), the method further comprises that the at least one controller (101):
∘ enables or disables the input of the wastewater main flow to the equalization unit (30), by means of wastewater level data measured by the at least one wastewater level sensor;
∘ operates the first impulsion subunit (41) based on predefined mixing operation times or based on pH data of the wastewater portion measured by the at least one pH sensor (42) of the mixing unit (40), wherein the predefined mixing operation times are stored in the at least one controller (101);
∘ adjusts parameters of the wastewater portion extracted by the mixing unit (40), by means of the pH data and the operation of the at least one additive injection location (44);
∘ operates the second impulsion subunit based on predefined wastewater feed operation times, a wastewater feed volume or an absolute value of solids, wherein the predefined wastewater feed operation times are stored in the at least one controller (101), the wastewater feed volume is obtained by means of the at least one wastewater feed flowmeter (51) and the absolute value of solids is obtained by means of data from the at least one TSS sensor (42) and the volume delivered by the at least one wastewater feed flowmeter (51); and
∘ operates the at least one recirculation valve and/or the third impulsion subunit based on a predefined quantity of biofiltered wastewater to be recirculated to the equalization unit (30) and recirculation volume measured by the at least one recirculation flowmeter.

12. The method of claim 11, **characterized in that** it further comprises removing suspended particles greater than a predefined size of suspended particles from the wastewater main flow, by means of a filtration unit (20) upstream the equalization unit (30), wherein the filtration unit (20) comprises at least one filter; and **in that** the filtration unit (20) comprises at least one filtration pressure sensor, wherein the at least one controller (101) is further in communication with the filtration unit and, if the at least one filtration pressure sensor measures a filtration pressure greater than a predefined filtration pressure threshold, the method further comprises that the at least a controller (101):
- disables the main wastewater Flow
- bypasses the wastewater main flow directly to the equalization unit (30); or
- when the filtering unit comprises two or more filters and a first filter has triggered the filtration pressure sensor, activates a redirecting valve that redirects the wastewater main flow to a second filter.

13. The method of claim 11, **characterized in that** the wastewater level sensor is an ultrasonic sensor that measures the instantaneous distance from the highest part of the at least one equalization tank (31) to a wastewater surface inside said equalization tank (31), and wherein the equalization tank (31) also includes:
- at least one low level switch;
- at least one medium level switch with high and low positions; and
- at least one high level switch;
wherein the method further comprises that the at least one controller (101):
- deactivates the first, second and/or third impulsion subunits if the low-level switch is activated;
- enables the wastewater main flow from the wastewater source (10) if the mid-level switch is activated in the low position;
- disables the wastewater main flow from the wastewater source (10) if the mid-level switch is activated in the high position; and
- disables the wastewater main flow from the wastewater source (10) if the high-level switch is activated.

14. The method of claim 11, **characterized in that** the mixing unit (40) comprises at least one mixing line that is arranged close to a bottom of the at least one equalization tank (31), wherein:
- extracting the wastewater portion from the equalization tank (31) is carried out in an extraction section of the at least one mixing line, by means of the first impulsion subunit (41); and
- measuring and adjusting parameters of the wastewater portion is carried out in a measurement and adjustment section of the at least one mixing line, wherein the measurement and adjustment section comprises the at least one pH sensor (42), the at least one TSS sensor (42) and the at least one additive injection location (44);
wherein the method further comprises introducing air to the wastewater portion in an aeration section of the at least one mixing unit (40), obtaining an aerated wastewater portion;
wherein delivering the portion of wastewater with adjusted parameters and aerated is carried out in an injection section inside the at least one equalization tank (31); and
wherein the first impulsion subunit (41) is a mixing pump, the aeration section comprises a Venturi device (45) that extracts atmospheric air and the injection section comprises a distribution ring with mixing injectors within the at least one equalization tank (31), wherein by means of the Venturi device (45) and the mixing injectors the method further comprises mixing and distributing the aerated wastewater portion with adjusted parameters within the at least one equalization tank (31) and adding oxygen within the at least one equalization tank (31), obtaining the wastewater feed suitable for biofiltration.

15. The method of claim 14, **characterized in that**:
- the predefined mixing operation times comprise activation and deactivation intervals of the first impulsion subunit (41), said activation and deactivation intervals being of between 7 to 13 minutes, preferably of 10 minutes;
- when the at least one pH sensor (42) measures a pH level lower than 5.5 or greater than 9-0, preferably lower than 6.0 or greater than 8.5, the method comprises that the at least one controller (101):
∘ activates the first impulsion subunit (41);
∘ activates the injection of at least one pH regulating additive via the at least one additive injection location (44); and
∘ deactivates the second impulsion subunit; and
- when the at least one pH sensor (42) measures a pH level within the range 5.5-9.0, preferably 6.0-8.5, the method further comprises that the at least one controller (101):
∘ deactivates the injection of the at least one pH regulating additive; and
∘ deactivates the first impulsion subunit (41) with a predefined delay time, to ensure the mixing of the wastewater within the equalization unit (30) with the wastewater portion with adjusted parameters, obtaining the wastewater feed suitable for biofiltration.

16. The method of claim 14, **characterized in that** the measurement and adjustment section comprises:
- one or more additional sensors configured to measure electrical conductivity, temperature and/or pressure of the first impulsion subunit (41); and
- additional additive injection locations configured to adjust parameters of the wastewater portion based on odor control and/or larvae and fly control, and/or to supplement bacteria to the biofiltration unit (60).

17. The method of claim 11, **characterized in that** the at least one additive source (43) corresponds to at least one additive tank, wherein the at least one additive tank comprises a metering pump that injects at least one additive by means of the at least one controller (101), wherein each additive tank comprises at least one additive level sensor that emits alerts regarding an amount of remaining additive.

18. The method of claim 11, **characterized in that**:
- the second impulsion subunit corresponds to wastewater feed pumps which quantity and capacity are defined based on a wastewater feed surface of the biofiltration unit (60), including an additional wastewater feed pump in case of failure, wherein the method also includes that the at least one controller (101) activates a sequence of activating the wastewater feed pumps alternately for each wastewater feed cycle and based on the predefined wastewater feed operation times, the wastewater feed volume or the absolute value of solids;
- the pumping unit (50) comprises at least one wastewater feed pressure sensor downstream each wastewater feed pump, wherein the method further comprises that the at least one controller (101) deactivates each wastewater feed pump if the at least one wastewater feed pressure sensor measures a wastewater feed pressure greater than a predefined wastewater feed pressure threshold;
- the pumping unit (50) comprises a manifold downstream the at least one wastewater feed pressure sensor, wherein the method further comprises that the manifold unifies the pressure of the wastewater feed before the biofiltration unit (60), wherein the manifold comprises a wastewater feed inlet for each wastewater feed pump and an outlet; and
- the at least one wastewater feed flowmeter (51) of the pumping unit (50) is arranged at the outlet of the manifold and upstream a wastewater feed line that delivers wastewater feed to the biofiltration unit (60).

19. The method of claim 18, **characterized in that** the at least one biofiltration bed comprises at least one moisture sensor, wherein the at least one controller (101) is further in communication with the at least one moisture sensor and,
- if a moisture level of the at least one biofiltration bed is greater than a predefined moisture upper threshold, the method further comprises that the at least one controller (101) deactivates the at least one wastewater feed pump and/or closes a respective electrovalve, or
- if a moisture level of the at least one biofiltration bed is lower than a predefined moisture lower threshold, the method further comprises that the at least one controller (101) activates the at least one wastewater feed pump and/or opens a respective electrovalve.

20. The method of claim 16, **characterized in that** the predefined wastewater feed operation times and setpoints for the wastewater feed volume and the absolute value of solids are main control parameters defined and stored in the at least one controller (101) for each biofiltration bed of the biofiltration unit (60), for each wastewater feed cycle and for a daily total.

## Patentansprüche

1. Ein Abwasser-Biofiltrationssystem mit einem integrierten System zur Überwachung und Steuerung der Abwasser-Biofiltration, wobei das Abwasser-Biofiltrationssystem umfasst:
- eine Abwasserquelle (10), die konfiguriert ist, um einen Hauptabfluss von Abwasser bereitzustellen;
- eine Ausgleichseinheit (30) stromabwärts der Abwasserquelle (10), die konfiguriert ist, um den Hauptabfluss von Abwasser in kontrollierbarer Weise zu empfangen und Parameter des Abwassers anzupassen, um eine für die Biofiltration geeignete Abwasserzufuhr zu erhalten, wobei die Ausgleichseinheit (30) mindestens einen Ausgleichstank (31) umfasst, der umfasst:
o mindestens einen Abwassereinlass;
o mindestens einen Abwasserzuflußausgang; und
o mindestens einen Abwasserstandsensor;
- eine Mischereinheit (40), die konfiguriert ist, um einen Abwasseranteil aus der Ausgleichseinheit (30) zu entnehmen, Parameter des Abwasseranteils zu messen und anzupassen und den Abwasseranteil mit angepassten Parametern an die Ausgleichseinheit (30) zu liefern, wobei die Mischereinheit (40) umfasst:
o eine erste Impulsuntereinheit (41);
o mindestens einen pH-Sensor (42);
o mindestens einen Sensor für Gesamtschwebstoffe (TSS) (42); und
o mindestens einen Additiveinspritzort (44) zur Einspritzung von Additiven aus mindestens einer Additivquelle (43);
- eine Pumpeneinheit (50) stromabwärts der Ausgleichseinheit (30), die konfiguriert ist, um die Abwasserzufuhr aus der Ausgleichseinheit (30) zu entnehmen und die Abwasserzufuhr an eine Biofiltrationseinheit (60) zu liefern, wodurch Abwasserzufuhrzyklen initiiert werden, wobei die Pumpeneinheit (50) eine zweite Impulsuntereinheit und mindestens einen Abwasserzuflußdurchflussmesser (51) umfasst;
- eine Biofiltrationseinheit (60) stromabwärts der Pumpeneinheit (50), die konfiguriert ist, um die Abwasserzufuhr über mindestens ein Biofiltrationsbett zu empfangen, das Abwasser zu biofiltrieren und biofiltriertes Abwasser zu liefern;
- eine biofiltrierte Abwasserableitung (80) stromabwärts der Biofiltrationseinheit (60), die konfiguriert ist, um das biofiltrierte Abwasser zu empfangen;
- eine Rückführungseinheit (70), die konfiguriert ist, um einen biofiltrierten Abwasseranteil aus der biofiltrierten Abwasserableitung (80) zu entnehmen und den biofiltrierten Abwasseranteil an die Ausgleichseinheit (30) zu liefern, wobei die Rückführungseinheit (70) mindestens ein Rückführungsventil und/oder eine dritte Impulsuntereinheit umfasst, und wobei die Rückführungseinheit (70) ferner mindestens einen Rückführungsdurchflussmesser umfasst; und
- mindestens einen Controller (101), der mit den Ausgleichs-, Misch-, Pump- und Rückführungseinheiten (50, 70) kommuniziert, der konfiguriert ist, um:
∘ den Eingang des Hauptabflusses von Abwasser zur Ausgleichseinheit (30) zu aktivieren oder zu deaktivieren, mittels Abwasserstanddaten, die von mindestens einem Abwasserstandsensor gemessen werden;
∘ die erste Impulsuntereinheit (41) basierend auf vordefinierten Mischbetriebszeiten oder basierend auf **pH**-Daten des Abwasseranteils, die von mindestens einem pH-Sensor (42) der Mischereinheit (40) gemessen werden, zu betreiben, wobei die vordefinierten Mischbetriebszeiten im mindestens einen Controller (101) gespeichert sind;
∘ Parameter des Abwasseranteils, der von der Mischereinheit (40) entnommen wird, mittels der pH-Daten und dem Betrieb des mindestens einen Additiveinspritzorts (44) anzupassen;
∘ die zweite Impulsuntereinheit basierend auf vordefinierten Abwasserzufuhrbetriebszeiten, einem Abwasserzufuhrvolumen oder einem absoluten Wert von Feststoffen zu betreiben, wobei die vordefinierten Abwasserzufuhrbetriebszeiten im mindestens einen Controller (101) gespeichert sind, das Abwasserzufuhrvolumen mittels des mindestens einen Abwasserzuflußdurchflussmessers (51) ermittelt wird und der absolute Wert von Feststoffen mittels Daten des mindestens einen **TSS**-Sensors (42) und dem Volumen, das vom mindestens einen Abwasserzuflußdurchflussmesser (51) geliefert wird, ermittelt wird; und
o die mindestens eine Rückführungsventil und/oder die dritte Impulsuntereinheit basierend auf einer vordefinierten Menge von biofiltriertem Abwasser, das an die Ausgleichseinheit (30) zurückgeführt werden soll, und dem Rückführungsvolumen, das von dem mindestens einen Rückführungsdurchflussmesser gemessen wird, zu betreiben.

2. Das System nach Anspruch 1, **dadurch gekennzeichnet, dass** es ferner eine Filtrationseinheit (20) stromaufwärts der Ausgleichseinheit (30) umfasst, wobei die Filtrationseinheit (20) mindestens einen Filter umfasst, der konfiguriert ist, um schwebende Partikel, die größer sind als eine vordefinierte Größe von schwebenden Partikeln, aus dem Hauptabfluss von Abwasser zu entfernen; und dass die Filtrationseinheit (20) mindestens einen Filtrationsdrucksensor umfasst, wobei der mindestens eine Controller (101) ferner mit der Filtrationseinheit (20) kommuniziert und, wenn der mindestens eine Filtrationsdrucksensor einen Filtrationsdruck misst, der größer ist als ein vordefinierter Filtrationsdruckschwellenwert, der mindestens eine Controller (101) ferner konfiguriert ist, um:
- den Hauptabfluss von Abwasser zu deaktivieren;
- den Hauptabfluss von Abwasser direkt zur Ausgleichseinheit (30) zu umgehen: oder
- wenn die Filtrationseinheit zwei oder mehr Filter umfasst und ein erster Filter den Filtrationsdrucksensor ausgelöst hat, ein Umleitungsventil zu aktivieren, das konfiguriert ist, um den Hauptabfluss von Abwasser zu einem zweiten Filter umzuleiten.

3. Das System nach Anspruch 1, **dadurch gekennzeichnet, dass** der Abwasserstandsensor ein Ultraschallsensor ist, der konfiguriert ist, um den momentanen Abstand von dem höchsten Teil des mindestens einen Ausgleichstanks (31) zu einer Abwasseroberfläche innerhalb des genannten Ausgleichstanks (31) zu messen, und wobei der Ausgleichstank (31) auch umfasst:
- mindestens einen Niedrigstandschalter;
- mindestens einen Mittelstandschalter mit hohen und niedrigen Positionen; und
- mindestens einen Hochstandschalter;
wobei der mindestens eine Controller (101) ferner konfiguriert ist, um:
- die erste, zweite und/oder dritte Impulsuntereinheit zu deaktivieren, wenn der Niedrigstandschalter aktiviert ist;
- den Hauptabfluss von Abwasser aus der Abwasserquelle (10) zu aktivieren, wenn der Mittelstandschalter in der niedrigen Position aktiviert ist;
- den Hauptabfluss von Abwasser aus der Abwasserquelle (10) zu deaktivieren, wenn der Mittelstandschalter in der hohen Position aktiviert ist; und
- den Hauptabfluss von Abwasser aus der Abwasserquelle (10) zu deaktivieren, wenn der Hochstandschalter aktiviert ist.

4. Das System nach Anspruch 1, **dadurch gekennzeichnet, dass** die Mischereinheit (40) mindestens eine Mischleitung umfasst, die nahe dem Boden des mindestens einen Ausgleichstanks (31) angeordnet ist, wobei die mindestens eine Mischleitung umfasst:
- einen Entnahmesektor, der konfiguriert ist, um den Abwasseranteil aus der Ausgleichseinheit (30) durch die erste Impulsuntereinheit (41) zu entnehmen;
- einen Mess- und Anpassungssektor, der konfiguriert ist, um Parameter des Abwasseranteils zu messen und anzupassen, wobei der Mess- und Anpassungssektor den mindestens einen pH-Sensor (42), den mindestens einen TSS-Sensor (42) und den mindestens einen Additiveinspritzort (44) umfasst;
- einen Belüftungssektor, der konfiguriert ist, um Luft in den Abwasseranteil einzuführen und einen belüfteten Abwasseranteil zu erhalten; und
- einen Einspritzsektor, der konfiguriert ist, um den belüfteten Abwasseranteil mit angepassten Parametern innerhalb des mindestens einen Ausgleichstanks (31) zu liefern;
wobei die erste Impulsuntereinheit (41) eine Mischpumpe ist, der Belüftungssektor umfasst ein Venturi-Gerät (45), das konfiguriert ist, um atmosphärische Luft zu entnehmen, und der Einspritzsektor umfasst einen Verteilerring mit Mischinjektoren innerhalb des mindestens einen Ausgleichstanks (31), wobei das Venturi-Gerät (45) und die Mischinjektoren konfiguriert sind, um den belüfteten Abwasseranteil mit angepassten Parametern innerhalb des mindestens einen Ausgleichsteichs zu mischen und zu verteilen und um Sauerstoff innerhalb des mindestens einen Ausgleichstanks (31) hinzuzufügen, wodurch die für die Biofiltration geeignete Abwasserzufuhr erhalten wird.

5. Das System nach Anspruch 1, **dadurch gekennzeichnet, dass** die mindestens eine Additivquelle (43) mindestens einem Additivtank entspricht, wobei der mindestens eine Additivtank eine Dosierpumpe umfasst, die so konfiguriert ist, dass sie das mindestens eine Additiv durch den mindestens einen Regler (101) einspritzt, wobei jeder Additivtank mindestens einen Additivstandsensor umfasst, der konfiguriert ist, um Warnungen bezüglich der verbleibenden Menge an Additiv auszugeben.

6. Das System nach Anspruch 1, **dadurch gekennzeichnet, dass**:
- die zweite Impulsuntereinheit den Abwasserzufuhrpumpen entspricht, deren Menge und Kapazität basierend auf einer Abwasserzufuhrfläche der Biofiltrationseinheit (60) definiert sind, einschließlich einer zusätzlichen Abwasserzufuhrpumpe im Falle eines Ausfalls, wobei der mindestens eine Regler (101) auch so konfiguriert ist, dass er eine Sequenz zur alternierenden Aktivierung der Abwasserzufuhrpumpen für jeden Abwasserzufuhrzyklus und basierend auf den vordefinierten Abwasserzufuhrbetriebszeiten, dem Abwasserzufuhrvolumen oder dem Absolutwert der Feststoffe aktiviert;
- die Pumpeneinheit (50) mindestens einen Abwasserzufuhrdrucksensor stromabwärts jeder Abwasserzufuhrpumpe umfasst, wobei der mindestens eine Regler (101) ferner so konfiguriert ist, dass er jede Abwasserzufuhrpumpe deaktiviert, wenn der mindestens eine Abwasserzufuhrdrucksensor einen Abwasserzufuhrdruck über einem vordefinierten Abwasserzufuhrdruckschwellenwert misst;
- die Pumpeneinheit (50) einen Verteiler stromabwärts des mindestens einen Abwasserzufuhrdrucksensors umfasst, wobei der Verteiler so konfiguriert ist, dass er den Abwasserzufuhrdruck vor der Biofiltrationseinheit (60) vereinheitlicht, der Verteiler umfasst einen Abwasserzufuhranschluss für jede Abwasserzufuhrpumpe und einen Ausgang; und
- der mindestens eine Abwasserzufuhrdurchflussmesser (51) der Pumpeneinheit (50) am Ausgang des Verteilers und stromaufwärts einer Abwasserzufuhrleitung angeordnet ist, die konfiguriert ist, um Abwasserzufuhr zur Biofiltrationseinheit (60) zu liefern.

7. Das System nach Anspruch 6, **dadurch gekennzeichnet, dass** das mindestens eine Biofiltrationsbett mindestens einen Feuchtigkeitssensor umfasst, wobei der mindestens eine Regler (101) ferner mit dem mindestens einen Feuchtigkeitssensor kommuniziert und,
- wenn der Feuchtigkeitsgehalt des mindestens einen Biofiltrationsbettes größer als ein vordefinierter oberer Feuchtigkeitsschwellenwert ist, der mindestens eine Regler (101) ferner so konfiguriert ist, dass er die mindestens eine Abwasserzufuhrpumpe deaktiviert und/oder ein entsprechendes Elektromagnetventil schließt, oder
- wenn der Feuchtigkeitsgehalt des mindestens einen Biofiltrationsbettes niedriger als ein vordefinierter unterer Feuchtigkeitsschwellenwert ist, der mindestens eine Regler (101) ferner so konfiguriert ist, dass er die mindestens eine Abwasserzufuhrpumpe aktiviert und/oder ein entsprechendes Elektromagnetventil öffnet.

8. Das System nach Anspruch 1, **dadurch gekennzeichnet, dass** die Biofiltrationseinheit (60) zwei oder mehr Biofiltrationsbetten umfasst, wobei die Pumpeneinheit (50) eine unabhängige Abwasserzufuhrleitung für jedes Biofiltrationsbett umfasst, wobei jede Abwasserzufuhrleitung eine Abwasserzufuhrpumpe und ein entsprechendes Elektromagnetventil umfasst, wobei der mindestens eine Regler (101) ferner so konfiguriert ist, dass er das Öffnen und Schließen jedes Elektromagnetventils mit einer Verzögerungszeit bei der Aktivierung oder Deaktivierung der jeweiligen Abwasserzufuhrpumpe steuert, basierend auf den vordefinierten Abwasserzufuhrbetriebszeiten, dem Abwasserzufuhrvolumen oder dem Absolutwert der Feststoffe.

9. Das System nach Anspruch 1, **dadurch gekennzeichnet, dass** die Ausgleichseinheit (30), die Mischereinheit (40), die Pumpeneinheit (50), die Rückführungseinheit (70) und der mindestens eine Regler (101) zumindest teilweise in einem Gehäuse namens Steuereinheit (100) enthalten sind, wobei die Steuereinheit (100) optional eine Filtrationseinheit (20) stromaufwärts der Ausgleichseinheit (30) umfasst.

10. Das System nach Anspruch 9, **gekennzeichnet dadurch, dass** die Steuereinheit (100) ferner mindestens einen Ventilator und/oder Licht (102) umfasst, die auf einem Dach des Gehäuses angeordnet sind, Isolierungselemente, die an den Wänden des Gehäuses angeordnet sind, mindestens ein Heizgerät und/oder mindestens eine Zugangstür (104).

11. Ein Abwasser-Biofiltrationsverfahren mit integrierter Überwachung und Steuerung der Abwasser-Biofiltration, wobei das Abwasser-Biofiltrationsverfahren umfasst:
- Empfangen eines Abwasserhauptstroms von einer Abwasserquelle (10) in einer Ausgleichseinheit (30) stromabwärts der Abwasserquelle (10), wobei die Ausgleichseinheit (30) den Abwasserhauptstrom auf kontrollierbare Weise empfängt und die Abwasserparameter anpasst, um einen für die Biofiltration geeigneten Abwasserzufluss zu erhalten, und wobei die Ausgleichseinheit (30) mindestens einen Ausgleichstank (31) umfasst, der umfasst:
o mindestens einen Abwasserzulauf;
o mindestens einen Abwasserzuflußausgang; und
o mindestens einen Abwasserstandsensor;
- Extrahieren eines Abwasseranteils aus der Ausgleichseinheit (30) mittels einer Mischereinheit (40), wobei die Mischereinheit (40) umfasst:
o eine erste Impulsuntereinheit (41);
o mindestens einen pH-Sensor (42);
∘ mindestens einen Gesamtgehalt an Schwebstoffen **(TSS)**-Sensor (42); und
∘ mindestens einen Additivinjektionsort (44) für die Additivinjektion aus mindestens einer Additivquelle (43);
- Messen und Anpassen der Parameter des Abwasseranteils mittels der Mischereinheit (40);
- Liefern des Abwasseranteils mit angepassten Parametern an die Ausgleichseinheit (30),
- Extrahieren des Abwasserzuflusses aus der Ausgleichseinheit (30) mittels einer Pumpeneinheit (50) stromabwärts der Ausgleichseinheit (30), wobei die Pumpeneinheit (50) eine zweite Impulsuntereinheit und mindestens einen Abwasserzufuhrdurchflussmesser (51) umfasst;
- Liefern des Abwasserzuflusses an mindestens ein Biofiltrationsbett einer Biofiltrationseinheit (60), Einleiten von Abwasserzufuhrzyklen;
- Empfangen des Abwasserzuflusses in der Biofiltrationseinheit (60) stromabwärts der Pumpeneinheit (50), wobei die Biofiltrationseinheit (60) den Abwasserzufluss biofiltert und biofiltriertes Abwasser liefert;
- Empfangen des biofiltrierten Abwassers in einem biofiltrierten Abwasserabfluss (80) stromabwärts der Biofiltrationseinheit (60);
- Extrahieren eines Anteils des biofiltrierten Abwassers aus dem Abwasserabfluss (80) mittels einer Rückführungseinheit (70), wobei die Rückführungseinheit (70) mindestens ein Rückführungsventil und/oder eine dritte Impulsuntereinheit umfasst, und wobei die Rückführungseinheit (70) ferner mindestens einen Rückführungsdurchflussmesser umfasst; und
- Liefern des biofiltrierten Abwasseranteils an die Ausgleichseinheit (30);
wobei, mittels des mindestens einen Reglers (101), der mit den Ausgleichs-, Misch-, Pumpen- und Rückführungseinheiten (50, 70) kommuniziert, das Verfahren ferner umfasst, dass der mindestens eine Regler (101):
∘ die Eingabe des Abwasserhauptstroms in die Ausgleichseinheit (30) aktiviert oder deaktiviert, mittels der von dem mindestens einen Abwasserstandsensor gemessenen Abwasserstandsdaten;
∘ die erste Impulsuntereinheit (41) basierend auf vordefinierten Mischbetriebszeiten oder basierend auf pH-Daten des Abwasseranteils, die von dem mindestens einen pH-Sensor (42) der Mischereinheit (40) gemessen werden, betreibt, wobei die vordefinierten Mischbetriebszeiten im mindestens einen Regler (101) gespeichert sind;
o die Parameter des Abwasseranteils, der von der Mischereinheit (40) extrahiert wurde, mittels der pH-Daten und der Betätigung des mindestens einen Additivinjektionsorts (44) anpasst;
∘ betrieben die zweite Impulsionsuntereinheit basierend auf vordefinierten Betriebszeiten der Abwasserzufuhr, einem Abwasserzufuhrvolumen oder einem absoluten Wert von Feststoffen, wobei die vordefinierten Betriebszeiten der Abwasserzufuhr im mindestens einen Steuergerät (101) gespeichert sind, das Abwasserzufuhrvolumen durch das mindestens eine Abwasserzufuhrdurchflussmessgerät (51) ermittelt wird und der absolute Wert von Feststoffen durch Daten des mindestens einen TSS Sensors (42) und das von dem mindestens einen Abwasserzufuhrdurchflussmessgerät (51) gelieferte Volumen ermittelt wird; und
o betrieben das mindestens eine Rücklaufventil und/oder die dritte Impulsionsuntereinheit basierend auf einer vordefinierten Menge von biofiltriertem Abwasser, das in die Ausgleichseinheit (30) zurückgeführt werden soll, und dem Rücklaufvolumen, das durch das mindestens eine Rücklaufdurchflussmessgerät gemessen wird.

12. Das Verfahren nach Anspruch 11, **dadurch gekennzeichnet, dass** es zusätzlich das Entfernen von suspendierten Partikeln größer als eine vordefinierte Größe von suspendierten Partikeln aus dem Hauptabfluss des Abwassers umfasst, mittels einer Filtrationseinheit (20) stromaufwärts der Ausgleichseinheit (30), wobei die Filtrationseinheit (20) mindestens einen Filter umfasst; und dass die Filtrationseinheit (20) mindestens einen Filtrationsdrucksensor umfasst, wobei das mindestens eine Steuergerät (101) zusätzlich mit der Filtrationseinheit kommuniziert und, wenn der mindestens eine Filtrationsdrucksensor einen Filtrationsdruck misst, der größer ist als ein vordefinierter Filtrationsdruckschwellenwert, das Verfahren zusätzlich umfasst, dass das mindestens eine Steuergerät (101):
- deaktiviert den Hauptabwasserfluss
- leitet den Hauptabwasserfluss direkt zur Ausgleichseinheit (30); oder
- wenn die Filtrationseinheit zwei oder mehr Filter umfasst und ein erster Filter den Filtrationsdrucksensor ausgelöst hat, aktiviert ein Umleitungsventil, das den Hauptabwasserfluss zu einem zweiten Filter umleitet.

13. Das Verfahren nach Anspruch 11, **dadurch gekennzeichnet, dass** der Abwasserstandsensor ein Ultraschallsensor ist, der den aktuellen Abstand von der höchsten Stelle des mindestens einen Ausgleichstanks (31) zu einer Abwasseroberfläche innerhalb des genannten Ausgleichstanks (31) misst, und wobei der Ausgleichstank (31) auch umfasst:
- mindestens einen Niedrigstandschalter;
- mindestens einen Mittelstandschalter mit hohen und niedrigen Positionen; und
- mindestens einen Hochstandschalter;
wobei das Verfahren zusätzlich umfasst, dass das mindestens eine Steuergerät (101):
- deaktiviert die erste, zweite und/oder dritte Impulsionsuntereinheit, wenn der Niedrigstandschalter aktiviert ist;
- ermöglicht den Hauptabwasserfluss aus der Abwasserquelle (10), wenn der Mittelstandschalter in der niedrigen Position aktiviert ist;
- deaktiviert den Hauptabwasserfluss aus der Abwasserquelle (10), wenn der Mittelstandschalter in der hohen Position aktiviert ist; und
- deaktiviert den Hauptabwasserfluss aus der Abwasserquelle (10), wenn der Hochstandschalter aktiviert ist.

14. Das Verfahren nach Anspruch 11, **dadurch gekennzeichnet, dass** die Mischereinheit (40) mindestens eine Mischleitung umfasst, die nahe dem Boden des mindestens einen Ausgleichstanks (31) angeordnet ist, wobei:
- das Entnehmen des Abwasseranteils aus dem Ausgleichstank (31) in einem Entnahmeabschnitt der mindestens einen Mischleitung erfolgt, mittels der ersten Impulsionsuntereinheit (41); und
- das Messen und Anpassen von Parametern des Abwasseranteils in einem Mess- und Anpassungsabschnitt der mindestens einen Mischleitung erfolgt, wobei der Mess- und Anpassungsabschnitt den mindestens einen pH-Sensor (42), den mindestens einen TSS-Sensor (42) und den mindestens einen Additiveinspritzort (44) umfasst;
wobei das Verfahren zusätzlich umfasst, Luft in den Abwasseranteil in einem Belüftungsabschnitt der mindestens einen Mischereinheit (40) einzuführen, um einen belüfteten Abwasseranteil zu erhalten;
wobei das Liefern des Abwasseranteils mit angepassten Parametern und belüftet in einem Einspritzabschnitt innerhalb des mindestens einen Ausgleichstanks (31) erfolgt; und
wobei die erste Impulsionsuntereinheit (41) eine Mischpumpe ist, der Belüftungsabschnitt umfasst ein Venturi-Gerät (45), das atmosphärische Luft entnimmt, und der Einspritzabschnitt umfasst einen Verteilerring mit Mischinjektoren innerhalb des mindestens einen Ausgleichstanks (31), wobei das Verfahren zusätzlich umfasst, das belüftete Abwasseranteil mit angepassten Parametern innerhalb des mindestens einen Ausgleichstanks (31) zu mischen und zu verteilen und Sauerstoff innerhalb des mindestens einen Ausgleichstanks (31) hinzuzufügen, um das für die Biofiltration geeignete Abwasser zu erhalten.

15. Das Verfahren nach Anspruch 14, **dadurch gekennzeichnet, dass**:
- die vordefinierten Mischbetriebszeiten Aktivierungs- und Deaktivierungsintervalle der ersten Impulsionsuntereinheit (41) umfassen, wobei diese Aktivierungs- und Deaktivierungsintervalle zwischen 7 und 13 Minuten liegen, vorzugsweise 10 Minuten:
- wenn der mindestens eine pH-Sensor (42) einen pH-Wert misst, der niedriger als 5,5 oder höher als 9,0 ist, vorzugsweise niedriger als 6,0 oder höher als 8,5, umfasst das Verfahren, dass das mindestens eine Steuergerät (101):
∘ aktiviert die erste Impulsionsuntereinheit (41):
∘ aktiviert die Einspritzung von mindestens einem **pH** regulierenden Additiv über den mindestens einen Additiveinspritzort (44): und
∘ deaktiviert die zweite Impulsionsuntereinheit; und
- wenn der mindestens eine pH-Sensor (42) einen pH-Wert innerhalb des Bereichs von 5,5-9,0 misst, vorzugsweise 6,0-8,5, umfasst das Verfahren zusätzlich, dass das mindestens eine Steuergerät (101):
∘ deaktiviert die Einspritzung des mindestens einen pH-regulierenden Additivs; und
∘ deaktiviert die erste Impulsionsuntereinheit (41) mit einer vordefinierten Verzögerungszeit, um das Mischen des Abwassers innerhalb der Ausgleichseinheit (30) mit dem Abwasseranteil mit angepassten Parametern sicherzustellen, um das für die Biofiltration geeignete Abwasser zu erhalten.

16. Das Verfahren nach Anspruch 14, **dadurch gekennzeichnet, dass** der Mess- und Anpassungsabschnitt umfasst:
- ein oder mehrere zusätzliche Sensoren, die konfiguriert sind, um die elektrische Leitfähigkeit, Temperatur und/oder Druck der ersten Impulsionsuntereinheit (41) zu messen; und
- zusätzliche Additiveinspritzorte, die konfiguriert sind, um die Parameter des Abwasseranteils basierend auf Geruchskontrolle und/oder Larven- und Fliegenkontrolle anzupassen und/oder Bakterien zur Biofiltrationseinheit (60) hinzuzufügen.

17. Das Verfahren nach Anspruch **11, dadurch gekennzeichnet, dass** die mindestens eine Additivequelle (43) mindestens einem Additivtank entspricht, wobei der mindestens eine Additivtank eine Dosierpumpe umfasst, die mindestens ein Additiv mittels des mindestens einen Steuergeräts (101) einspritzt, wobei jeder Additivtank mindestens einen Additivefüllstandsensor umfasst, der Warnungen bezüglich der verbleibenden Menge an Additiv ausgibt.

18. Das Verfahren nach Anspruch **11, dadurch gekennzeichnet, dass**:
- die zweite Impulsionsuntereinheit den Abwasserzufuhrpumpen entspricht, deren Menge und Kapazität basierend auf einer Abwasserzufuhrfläche der Biofiltrationseinheit (60) definiert sind, einschließlich einer zusätzlichen Abwasserzufuhrpumpe im Falle eines Ausfalls, wobei das Verfahren auch umfasst, dass das mindestens eine Steuergerät (101) eine Sequenz zur alternierenden Aktivierung der Abwasserzufuhrpumpen für jeden Abwasserzufuhrzyklus und basierend auf den vordefinierten Betriebszeiten der Abwasserzufuhr, dem Abwasserzufuhrvolumen oder dem absoluten Wert von Feststoffen aktiviert;
- Die Pumpeneinheit (50) umfasst mindestens einen Abwasserzufuhrdrucksensor stromabwärts jeder Abwasserzufuhrpumpe, wobei das Verfahren ferner umfasst, dass der mindestens eine Steuerungseinheit (101) jede Abwasserzufuhrpumpe deaktiviert, wenn der mindestens eine Abwasserzufuhrdrucksensor einen Abwasserzufuhrdruck misst, der größer ist als ein vordefinierter Abwasserzufuhrdruckschwellenwert;
- Die Pumpeneinheit (50) umfasst eine Sammelleitung stromabwärts des mindestens einen Abwasserzufuhrdrucksensors, wobei das Verfahren ferner umfasst, dass die Sammelleitung den Druck des Abwasserzufuhr vor der Biofiltrationseinheit (60) vereinheitlicht, wobei die Sammelleitung einen Abwasserzufuhranschluss für jede Abwasserzufuhrpumpe und einen Ausgang umfasst; und
- Der mindestens eine Abwasserzufuhrdurchflussmesser (51) der Pumpeneinheit (50) ist am Ausgang der Sammelleitung und stromaufwärts einer Abwasserzufuhrleitung angeordnet, die Abwasserzufuhr zur Biofiltrationseinheit (60) liefert.

19. Das Verfahren nach Anspruch 18, **dadurch gekennzeichnet, dass** das mindestens eine Biofiltrationsbett mindestens einen Feuchtigkeitssensor umfasst, wobei die mindestens eine Steuerungseinheit (101) ferner mit dem mindestens einen Feuchtigkeitssensor kommuniziert und,
- wenn der Feuchtigkeitsgehalt des mindestens einen Biofiltrationsbettes größer ist als ein vordefinierter oberer Feuchtigkeitsschwellenwert, das Verfahren ferner umfasst, dass die mindestens eine Steuerungseinheit (101) die mindestens eine Abwasserzufuhrpumpe deaktiviert und/oder ein entsprechendes Elektromagnetventil schließt, oder
- wenn der Feuchtigkeitsgehalt des mindestens einen Biofiltrationsbettes niedriger ist als ein vordefinierter unterer Feuchtigkeitsschwellenwert, das Verfahren ferner umfasst, dass die mindestens eine Steuerungseinheit (101) die mindestens eine Abwasserzufuhrpumpe aktiviert und/oder ein entsprechendes Elektromagnetventil öffnet.

20. Das Verfahren nach Anspruch 16, **dadurch gekennzeichnet, dass** die vordefinierten Abwasserzufuhrbetriebszeiten und Sollwerte für das Abwasserzufuhrvolumen und den Absolutwert der Feststoffe Hauptregelparameter sind, die in der mindestens einen Steuerungseinheit (101) für jedes Biofiltrationsbett der Biofiltrationseinheit (60), für jeden Abwasserzufuhrzyklus und für eine tägliche Gesamtheit definiert und gespeichert sind.

## Revendications

1. Un système de biofiltration des eaux usées avec un système intégré de surveillance et de contrôle de la biofiltration des eaux usées, dans lequel le système de biofiltration des eaux usées comprend :
- une source d'eaux usées (10), configurée pour fournir un flux principal d'eaux usées ;
- une unité d'égalisation (30) en aval de la source d'eaux usées (10), configurée pour recevoir le flux principal d'eaux usées de manière contrôlable et pour ajuster les paramètres des eaux usées afin d'obtenir un apport d'eaux usées adapté à la biofiltration, dans laquelle l'unité d'égalisation (30) comprend au moins un réservoir d'égalisation (31) comprenant :
∘ au moins une entrée d'eaux usées ;
∘ au moins une sortie d'apport d'eaux usées ; et
∘ au moins un capteur de niveau d'eaux usées ;
- une unité de mélange (40), configurée pour extraire une portion d'eaux usées de l'unité d'égalisation (30), mesurer et ajuster les paramètres de la portion d'eaux usées, et livrer la portion d'eaux usées avec des paramètres ajustés à l'unité d'égalisation (30), dans laquelle l'unité de mélange (40) comprend :
∘ une première sous-unité d'impulsion (41) ;
∘ au moins un capteur de pH (42) ;
∘ au moins un capteur de solides en suspension totaux **(SST)** (42) ; et
∘ au moins un emplacement d'injection d'additif (44) pour l'injection d'additif à partir d'au moins une source d'additif (43) ;
- une unité de pompage (50) en aval de l'unité d'égalisation (30), configurée pour extraire l'apport d'eaux usées de l'unité d'égalisation (30) et livrer l'apport d'eaux usées à une unité de biofiltration (60), initiant des cycles d'apport d'eaux usées, dans laquelle l'unité de pompage (50) comprend une seconde sous-unité d'impulsion et au moins un débitmètre de flux d'apport d'eaux usées (51) ;
- une unité de biofiltration (60) en aval de l'unité de pompage (50), configurée pour recevoir l'apport d'eaux usées sur au moins un lit de biofiltration, biofiltrer l'apport d'eaux usées et livrer des eaux usées biofiltrées ;
- un décharge d'eaux usées biofiltrées (80) en aval de l'unité de biofiltration (60), configurée pour recevoir les eaux usées biofiltrées ;
- une unité de recirculation (70), configurée pour extraire une portion d'eaux usées biofiltrées du décharge d'eaux usées biofiltrées (80) et pour livrer la portion d'eaux usées biofiltrées à l'unité d'égalisation (30), dans laquelle l'unité de recirculation (70) comprend au moins une vanne de recirculation et/ou une troisième sous-unité d'impulsion, et dans laquelle l'unité de recirculation (70) comprend également au moins un débitmètre de recirculation ; et
- au moins un contrôleur (101) en communication avec les unités d'égalisation, de mélange, de pompage et de recirculation (50, 70), configuré pour :
∘ activer ou désactiver l'entrée du flux principal d'eaux usées à l'unité d'égalisation (30), au moyen de données de niveau d'eaux usées mesurées par le moins un capteur de niveau d'eaux usées ;
∘ faire fonctionner la première sous-unité d'impulsion (41) en fonction de temps d'opération de mélange prédéfinis ou en fonction des données de **pH** de la portion d'eaux usées mesurées par le moins un capteur de pH (42) de l'unité de mélange (40), dans laquelle les temps d'opération de mélange prédéfinis sont stockés dans le moins un contrôleur (101) ;
∘ ajuster les paramètres de la portion d'eaux usées extraite par l'unité de mélange (40), au moyen des données de pH et de l'opération du moins un emplacement d'injection d'additif (44) ;
o faire fonctionner la seconde sous-unité d'impulsion en fonction de temps d'opération d'apport d'eaux usées prédéfinis, d'un volume d'apport d'eaux usées ou d'une valeur absolue de solides, dans laquelle les temps d'opération d'apport d'eaux usées prédéfinis sont stockés dans le moins un contrôleur (101), le volume d'apport d'eaux usées est obtenu au moyen du moins un débitmètre de flux d'apport d'eaux usées (51) et la valeur absolue de solides est obtenue au moyen de données du moins un capteur de **SST** (42) et du volume livré par le moins un débitmètre de flux d'apport d'eaux usées (51) ; et
o faire fonctionner la ou les vannes de recirculation et/ou la troisième sous-unité d'impulsion en fonction d'une quantité prédéfinie d'eaux usées biofiltrées à recirculer vers l'unité d'égalisation (30) et du volume de recirculation mesuré par le moins un débitmètre de recirculation.

2. Le système de la revendication I, **caractérisé en ce qu'**il comprend en outre une unité de filtration (20) en amont de l'unité d'égalisation (30), dans laquelle l'unité de filtration (20) comprend au moins un filtre configuré pour éliminer les particules en suspension plus grandes qu'une taille prédéfinie de particules en suspension du flux principal d'eaux usées ; et **en ce que** l'unité de filtration (20) comprend au moins un capteur de pression de filtration, dans lequel le moins un contrôleur (101) est en outre en communication avec l'unité de filtration (20) et, si le moins un capteur de pression de filtration mesure une pression de filtration supérieure à un seuil de pression de filtration prédéfini, le moins un contrôleur (101) est en outre configuré pour :
- désactiver le flux principal d'eaux usées ;
- contourner le flux principal d'eaux usées directement vers l'unité d'égalisation (30) : ou
- lorsque l'unité de filtration comprend deux filtres ou plus et qu'un premier filtre a déclenché le capteur de pression de filtration, activer une vanne de redirection configurée pour rediriger le flux principal d'eaux usées vers un second filtre.

3. Le système de la revendication 1, **caractérisé en ce que** le capteur de niveau d'eaux usées est un capteur ultrasonique configuré pour mesurer la distance instantanée de la partie la plus haute du moins un réservoir d'égalisation (31) à une surface d'eaux usées à l'intérieur dudit réservoir d'égalisation (31), et dans lequel le réservoir d'égalisation (31) comprend également :
- au moins un interrupteur de niveau bas ;
- au moins un interrupteur de niveau moyen avec des positions haute et basse ; et
- au moins un interrupteur de niveau haut ;
dans lequel le moins un contrôleur (101) est en outre configuré pour :
- désactiver les premières, secondes et/ou troisièmes sous-unités d'impulsion si l'interrupteur de niveau bas est activé ;
- activer le flux principal d'eaux usées de la source d'eaux usées (10) si l'interrupteur de niveau moyen est activé en position basse ;
- désactiver le flux principal d'eaux usées de la source d'eaux usées (10) si l'interrupteur de niveau moyen est activé en position haute ; et
- désactiver le flux principal d'eaux usées de la source d'eaux usées (10) si l'interrupteur de niveau haut est activé.

4. Le système de la revendication 1, **caractérisé en ce que** l'unité de mélange (40) comprend au moins une ligne de mélange qui est disposée près du fond du moins un réservoir d'égalisation (31), dans laquelle la ou les lignes de mélange comprennent :
- une section d'extraction, configurée pour extraire la portion d'eaux usées de l'unité d'égalisation (30) par la première sous-unité d'impulsion (41) ;
- une section de mesure et d'ajustement, configurée pour mesurer et ajuster les paramètres de la portion d'eaux usées, dans laquelle la section de mesure et d'ajustement comprend le moins un capteur de pH (42), le moins un capteur de **SST** (42), et le moins un emplacement d'injection d'additif (44) ;
- une section d'aération, configurée pour introduire de l'air dans la portion d'eaux usées et obtenir une portion d'eaux usées aérée ; et
- une section d'injection, configurée pour livrer la portion d'eaux usées aérée avec des paramètres ajustés à l'intérieur du moins un réservoir d'égalisation (31) ;
dans laquelle la première sous-unité d'impulsion (41) est une pompe de mélange, la section d'aération comprend un dispositif Venturi (45) configuré pour extraire l'air atmosphérique et la section d'injection comprend un anneau de distribution avec des injecteurs de mélange à l'intérieur du moins un réservoir d'égalisation (31), dans lequel le dispositif Venturi (45) et les injecteurs de mélange sont configurés pour mélanger et distribuer la portion d'eaux usées aérée avec des paramètres ajustés à l'intérieur du moins un bassin d'égalisation et pour ajouter de l'oxygène à l'intérieur du moins un réservoir d'égalisation (31), obtenant l'apport d'eaux usées adapté à la biofiltration.

5. Le système de la revendication 1, **caractérisé en ce que** la ou les sources d'additifs (43) correspondent à au moins un réservoir d'additif, le ou les réservoirs d'additif comprenant une pompe doseuse configurée pour injecter le ou les additifs par le ou les contrôleurs (101), chaque réservoir d'additif comprenant au moins un capteur de niveau d'additif configuré pour émettre des alertes concernant la quantité d'additif restant.

6. Le système de la revendication 1, **caractérisé en ce que** :
- la seconde sous-unité d'impulsion correspond à des pompes d'alimentation en eaux usées dont la quantité et la capacité sont définies en fonction d'une surface d'alimentation en eaux usées de l'unité de biofiltration (60), incluant une pompe d'alimentation en eaux usées supplémentaire en cas de défaillance, le ou les contrôleurs (101) étant également configurés pour activer une séquence d'activation des pompes d'alimentation en eaux usées alternativement pour chaque cycle d'alimentation en eaux usées et en fonction des temps d'opération d'alimentation en eaux usées prédéfinis, du volume d'alimentation en eaux usées ou de la valeur absolue des solides ;
- l'unité de pompage (50) comprend au moins un capteur de pression d'alimentation en eaux usées en aval de chaque pompe d'alimentation en eaux usées, le ou les contrôleurs (101) étant en outre configurés pour désactiver chaque pompe d'alimentation en eaux usées si le ou les capteurs de pression d'alimentation en eaux usées mesurent une pression d'alimentation en eaux usées supérieure à un seuil de pression d'alimentation en eaux usées prédéfini ;
- l'unité de pompage (50) comprend un collecteur en aval du ou des capteurs de pression d'alimentation en eaux usées, le collecteur étant configuré pour unifier la pression d'alimentation en eaux usées avant l'unité de biofiltration (60), le collecteur comprenant une entrée d'alimentation en eaux usées pour chaque pompe d'alimentation en eaux usées et une sortie ; et
- le ou les débitmètres d'alimentation en eaux usées (51) de l'unité de pompage (50) sont disposés à la sortie du collecteur et en amont d'une ligne d'alimentation en eaux usées configurée pour délivrer l'alimentation en eaux usées à l'unité de biofiltration (60).

7. Le système de la revendication 6, **caractérisé en ce que** le ou les lits de biofiltration comprennent au moins un capteur d'humidité, le ou les contrôleurs (101) étant en outre en communication avec le ou les capteurs d'humidité et,
- si un niveau d'humidité du ou des lits de biofiltration est supérieur à un seuil supérieur d'humidité prédéfini, le ou les contrôleurs (101) étant en outre configurés pour désactiver la ou les pompes d'alimentation en eaux usées et/ou pour fermer une électrovanne respective, ou
- si un niveau d'humidité du ou des lits de biofiltration est inférieur à un seuil inférieur d'humidité prédéfini, le ou les contrôleurs (101) étant en outre configurés pour activer la ou les pompes d'alimentation en eaux usées et/ou pour ouvrir une électrovanne respective.

8. Le système de la revendication 1, **caractérisé en ce que** l'unité de biofiltration (60) comprend deux lits de biofiltration ou plus, l'unité de pompage (50) comprenant une ligne d'alimentation en eaux usées indépendante pour chaque lit de biofiltration, chaque ligne d'alimentation en eaux usées comprenant une pompe d'alimentation en eaux usées et une électrovanne respective, le ou les contrôleurs (101) étant en outre configurés pour faire fonctionner l'ouverture et la fermeture de chaque électrovanne avec un temps de retard sur l'activation ou la désactivation de la pompe d'alimentation en eaux usées respective, en fonction des temps d'opération d'alimentation en eaux usées prédéfinis, du volume d'alimentation en eaux usées ou de la valeur absolue des solides.

9. Le système de la revendication 1, **caractérisé en ce que** l'unité d'égalisation (30), l'unité de mélange (40), l'unité de pompage (50), l'unité de recirculation (70) et le ou les contrôleurs (101) sont, au moins en partie, inclus dans un boîtier nommé unité de contrôle (100), éventuellement, l'unité de contrôle (100) comprenant une unité de filtration (20) en amont de l'unité d'égalisation (30).

10. Le système de la revendication 9, **caractérisé en ce que** l'unité de contrôle (100) comprend en outre au moins un ventilateur et/ou une lumière (102) disposés sur un toit du boîtier, des éléments d'isolation disposés sur les murs du boîtier, au moins un dispositif de chauffage et/ou au moins une porte d'accès (104).

11. Un procédé de biofiltration des eaux usées avec une surveillance et un contrôle intégré de la biofiltration des eaux usées, le procédé de biofiltration des eaux usées comprenant :
- recevoir, d'une source d'eaux usées (10), un flux principal d'eaux usées dans une unité d'égalisation (30) en aval de la source d'eaux usées (10), ladite unité d'égalisation (30) recevant le flux principal d'eaux usées de manière contrôlable et ajustant les paramètres des eaux usées pour obtenir une alimentation en eaux usées adaptée à la biofiltration, et ladite unité d'égalisation (30) comprenant au moins un réservoir d'égalisation (31) comprenant :
o au moins une entrée d'eaux usées ;
o au moins une sortie d'alimentation en eaux usées ; et
o au moins un capteur de niveau d'eaux usées ;
- extraire une portion d'eaux usées de l'unité d'égalisation (30) au moyen d'une unité de mélange (40), ladite unité de mélange (40) comprenant :
∘ une première sous-unité d'impulsion (41) ;
∘ au moins un capteur de pH (42) ;
∘ au moins un capteur de solides en suspension totaux **(TSS)** (42) ; et
∘ au moins un emplacement d'injection d'additif (44) pour l'injection d'additif à partir d'au moins une source d'additif (43) ;
- mesurer et ajuster les paramètres de la portion d'eaux usées au moyen de l'unité de mélange (40) ;
- délivrer la portion d'eaux usées avec des paramètres ajustés à l'unité d'égalisation (30),
- **extraire,** de l'unité d'égalisation (30), l'alimentation en eaux usées au moyen d'une unité de pompage (50) en aval de l'unité d'égalisation (30), ladite unité de pompage (50) comprenant une seconde sous-unité d'impulsion et au moins un débitmètre d'alimentation en eaux usées (51)
- délivrer l'alimentation en eaux usées à au moins un lit de biofiltration d'une unité de biofiltration (60), initiant des cycles d'alimentation en eaux usées ;
- recevoir l'alimentation en eaux usées dans l'unité de biofiltration (60) en aval de l'unité de pompage (50), ladite unité de biofiltration (60) biofiltrant l'alimentation en eaux usées et délivrant des eaux usées biofiltrées ;
- recevoir les eaux usées biofiltrées dans une décharge d'eaux usées biofiltrées (80) en aval de l'unité de biofiltration (60) ;
- extraire une portion des eaux usées biofiltrées du décharge d'eaux usées (80) au moyen d'une unité de recirculation (70), ladite unité de recirculation (70) comprenant au moins une vanne de recirculation et/ou une troisième sous-unité d'impulsion, et ladite unité de recirculation (70) comprenant en outre au moins un débitmètre de recirculation ; et
- délivrer la portion d'eaux usées biofiltrées à l'unité d'égalisation (30) ; où, au moyen d'au moins un contrôleur (101) en communication avec les unités d'égalisation, de mélange, de pompage et de recirculation (50, 70), le procédé comprend en outre que le ou les contrôleurs (101) :
o permettent ou désactivent l'entrée du flux principal d'eaux usées dans l'unité d'égalisation (30), au moyen des données de niveau d'eaux usées mesurées par le ou les capteurs de niveau d'eaux usées ;
o font fonctionner la première sous-unité d'impulsion (41) en fonction des temps d'opération de mélange prédéfinis ou en fonction des données de pH de la portion d'eaux usées mesurées par le ou les capteurs de pH (42) de l'unité de mélange (40), les temps d'opération **de mélange** prédéfinis étant stockés dans le ou les contrôleurs (101)
o ajustent les paramètres de la portion d'eaux usées extraite par l'unité de mélange (40), au moyen des données de pH et de l'opération de l'au moins un emplacement d'injection d'additif (44) ;
∘ opère la deuxième sous-unité d'impulsion en fonction des temps d'opération de l'alimentation en eaux usées prédéfinis, d'un volume d'alimentation en eaux usées ou d'une valeur absolue de solides, les temps d'opération de l'alimentation en eaux usées prédéfinis étant stockés dans au moins un contrôleur (101), le volume d'alimentation en eaux usées étant obtenu par le biais de l'au moins un débitmètre d'alimentation en eaux usées (51) et la valeur absolue de solides étant obtenue par le biais de données provenant de l'au moins un capteur de TSS (42) et du volume délivré par l'au moins un débitmètre d'alimentation en eaux usées (51); et
∘ opère l'au moins une vanne de recirculation et/ou la troisième sous-unité d'impulsion en fonction d'une quantité prédéfinie d'eaux usées biofiltrées à recirculer vers l'unité d'égalisation (30) et du volume de recirculation mesuré par l'au moins un débitmètre de recirculation.

12. Le procédé de la revendication 11, **caractérisé en ce qu'**il comprend en outre l'élimination des particules en suspension supérieures à une taille prédéfinie de particules en suspension du flux principal d'eaux usées, par le biais d'une unité de filtration (20) en amont de l'unité d'égalisation (30), l'unité de filtration (20) comprenant au moins un filtre; et **en ce que** l'unité de filtration (20) comprend au moins un capteur de pression de filtration, l'au moins un contrôleur (101) étant en outre en communication avec l'unité de filtration et, si l'au moins un capteur de pression de filtration mesure une pression de filtration supérieure à un seuil de pression de filtration prédéfini, le procédé comprend en outre que l'au moins un contrôleur (101) :
- désactive le flux principal d'eaux usées ;
- contourne le flux principal d'eaux usées directement vers l'unité d'égalisation (30) ; ou
- lorsque l'unité de filtration comprend deux filtres ou plus et qu'un premier filtre a déclenché le capteur de pression de filtration, active une vanne de redirection qui redirige le flux principal d'eaux usées vers un deuxième filtre.

13. Le procédé de la revendication 11, **caractérisé en ce que** le capteur de niveau d'eaux usées est un capteur ultrasonique qui mesure la distance instantanée de la partie la plus haute de l'au moins un réservoir d'égalisation (31) à une surface d'eaux usées à l'intérieur dudit réservoir d'égalisation (31), et **en ce que** le réservoir d'égalisation (31) comprend également :
- au moins un interrupteur de niveau bas ;
- au moins un interrupteur de niveau moyen avec des positions haute et basse; et
- au moins un interrupteur de niveau haut ;
**en ce que** le procédé comprend en outre que l'au moins un contrôleur (101) :
- désactive les premières, deuxièmes et/ou troisièmes sous-unités d'impulsion si l'interrupteur de niveau bas est activé ;
- active le flux principal d'eaux usées de la source d'eaux usées (10) si l'interrupteur de niveau moyen est activé en position basse ;
- désactive le flux principal d'eaux usées de la source d'eaux usées (10) si l'interrupteur de niveau moyen est activé en position haute ; et
- désactive le flux principal d'eaux usées de la source d'eaux usées (10) si l'interrupteur de niveau haut est activé.

14. Le procédé de la revendication 11, **caractérisé en ce que** l'unité de mélange (40) comprend au moins une ligne de mélange qui est disposée près du fond de l'au moins un réservoir d'égalisation (31), **en ce que** :
- l'extraction de la portion d'eaux usées du réservoir d'égalisation (31) est effectuée dans une section d'extraction de l'au moins une ligne de mélange, par le biais de la première sous-unité d'impulsion (41) ; et
- la mesure et l'ajustement des paramètres de la portion d'eaux usées sont effectués dans une section de mesure et d'ajustement de l'au moins une ligne de mélange, la section de mesure et d'ajustement comprenant l'au moins un capteur de pH (42), l'au moins un capteur de TSS (42) et l'au moins un emplacement d'injection d'additif (44) ;
**en ce que** le procédé comprend en outre l'introduction d'air dans la portion d'eaux usées dans une section d'aération de l'au moins une unité de mélange (40), obtenant une portion d'eaux usées aérée ;
**en ce que** la livraison de la portion d'eaux usées avec des paramètres ajustés et aérée est effectuée dans une section d'injection à l'intérieur de l'au moins un réservoir d'égalisation (31) ; et
**en ce que** la première sous-unité d'impulsion (41) est une pompe de mélange, la section d'aération comprend un dispositif Venturi (45) qui extrait l'air atmosphérique et la section d'injection comprend un anneau de distribution avec des injecteurs de mélange à l'intérieur de l'au moins un réservoir d'égalisation (31), **en ce que** par le biais du dispositif Venturi (45) et des injecteurs de mélange, le procédé comprend en outre le mélange et la distribution de la portion d'eaux usées aérée avec des paramètres ajustés à l'intérieur de l'au moins un réservoir d'égalisation (31) et l'ajout d'oxygène à l'intérieur de l'au moins un réservoir d'égalisation (31), obtenant l'alimentation en eaux usées adaptée à la biofiltration.

15. Le procédé de la revendication 14, **caractérisé en ce que** :
- les temps d'opération de mélange prédéfinis comprennent des intervalles d'activation et de désactivation de la première sous-unité d'impulsion (41), ces intervalles d'activation et de désactivation étant compris entre 7 et 13 minutes, de préférence de 10 minutes :
- lorsque l'au moins un capteur de pH (42) mesure un niveau de pH inférieur à 5,5 ou supérieur à 9,0, de préférence inférieur à 6,0 ou supérieur à 8,5, le procédé comprend que l'au moins un contrôleur (101) :
o active la première sous-unité d'impulsion (41) :
o active l'injection d'au moins un **additif** régulateur de pH via l'au moins un emplacement d'injection d'additif (44) : et
o désactive la deuxième sous-unité d'impulsion ; et
- lorsque l'au moins un capteur de pH (42) mesure un niveau de pH dans la plage de 5,5 à 9,0, de préférence de 6,0 à 8,5, le procédé comprend en outre que l'au moins un contrôleur (101) :
o désactive l'injection de l'au moins un additif régulateur de pH ; et
o désactive la première sous-unité d'impulsion (41) avec un temps de retard prédéfini, pour assurer le mélange des eaux usées à l'intérieur de l'unité d'égalisation (30) avec la portion d'eaux usées avec des paramètres ajustés, obtenant l'alimentation en eaux usées adaptée à la biofiltration.

16. Le procédé de la revendication 14, **caractérisé en ce que** la section de mesure et d'ajustement comprend :
- un ou plusieurs capteurs supplémentaires configurés pour mesurer la conductivité électrique, la température et/ou la pression de la première sous-unité d'impulsion (41) ; et
- des emplacements d'injection d'additif supplémentaires configurés pour ajuster les paramètres de la portion d'eaux usées en fonction du contrôle des odeurs et/ou du contrôle des larves et des mouches, et/ou pour compléter les bactéries à l'unité de biofiltration (60).

17. Le procédé de la revendication **11, caractérisé en ce que** l'au moins une source d'additif (43) correspond à au moins un réservoir d'additif, l'au moins un réservoir d'additif comprenant une pompe doseuse qui injecte au moins un additif par le biais de l'au moins un contrôleur (101), chaque réservoir d'additif comprenant au moins un capteur de niveau d'additif qui émet des alertes concernant la quantité d'additif restant.

18. Le procédé de la revendication **11, caractérisé en ce que** :
- la deuxième sous-unité d'impulsion correspond à des pompes d'alimentation en eaux usées dont la quantité et la capacité sont définies en fonction d'une surface d'alimentation en eaux usées de l'unité de biofiltration (60), y compris une pompe d'alimentation en eaux usées supplémentaire en cas de défaillance, **en ce que** le procédé comprend également que l'au moins un contrôleur (101) active une séquence d'activation des pompes d'alimentation en eaux usées alternativement pour chaque cycle d'alimentation en eaux usées et en fonction des temps d'opération d'alimentation en eaux usées prédéfinis, du volume d'alimentation en eaux usées ou de la valeur absolue de solides ;
- l'unité de pompage (50) comprend au moins un capteur de pression d'alimentation en eaux usées en aval de chaque pompe d'alimentation en eaux usées, où la méthode comprend en outre que le ou les contrôleurs (101) désactivent chaque pompe d'alimentation en eaux usées si le ou les capteurs de pression d'alimentation en eaux usées mesurent une pression d'alimentation en eaux usées supérieure à un seuil de pression d'alimentation en eaux usées prédéfini ;
- l'unité de pompage (50) comprend un collecteur en aval du ou des capteurs de pression d'alimentation en eaux usées, où la méthode comprend en outre que le collecteur unifie la pression de l'alimentation en eaux usées avant l'unité de biofiltration (60), où le collecteur comprend une entrée d'alimentation en eaux usées pour chaque pompe d'alimentation en eaux usées et une sortie ; et
- le ou les débitmètres d'alimentation en eaux usées (51) de l'unité de pompage (50) sont disposés à la sortie du collecteur et en amont d'une conduite d'alimentation en eaux usées qui livre l'alimentation en eaux usées à l'unité de biofiltration (60).

19. La méthode de la revendication 18, **caractérisée en ce que** le ou les lits de biofiltration comprennent au moins un capteur d'humidité, où le ou les contrôleurs (101) sont en outre en communication avec le ou les capteurs d'humidité et,
- si un niveau d'humidité du ou des lits de biofiltration est supérieur à un seuil supérieur d'humidité prédéfini, la méthode comprend en outre que le ou les contrôleurs (101) désactivent la ou les pompes d'alimentation en eaux usées et/ou ferment une électrovanne respective, ou
- si un niveau d'humidité du ou des lits de biofiltration est inférieur à un seuil inférieur d'humidité prédéfini, la méthode comprend en outre que le ou les contrôleurs (101) activent la ou les pompes d'alimentation en eaux usées et/ou ouvrent une électrovanne respective.

20. La méthode de la revendication 16, **caractérisée en ce que** les temps de fonctionnement d'alimentation en eaux usées et les points de consigne prédéfinis pour le volume d'alimentation en eaux usées et la valeur absolue des solides sont des paramètres de contrôle principaux définis et stockés dans le ou les contrôleurs (101) pour chaque lit de biofiltration de l'unité de biofiltration (60), pour chaque cycle d'alimentation en eaux usées et pour un total quotidien.
